# EUROPÄISCHE PATENTSCHRIFT

(11) **EP 3 813 388 B1**
(45) Veröffentlichungstag und Bekanntmachung des Hinweises auf die Patenterteilung: **20.04.2022**
(21) Anmeldenummer: 19205026.8
(22) Anmeldetag: 24.10.2019
(51) Int. Cl.: H04W 4/00, H04W 4/02, H04L 29/08

(54) **VERFAHREN ZUR STEUERUNG EINER SYNCHRONEN, VERTEILTEN ABGABE VON LICHT**
METHOD FOR CONTROLLING A SYNCHRONOUS DISTRIBUTED DELIVERY OF LIGHT
PROCÉDÉ DE COMMANDE D'UNE DISTRIBUTION DE LUMIÈRE SYNCHRONE, DISTRIBUÉE

(43) Veröffentlichungstag der Anmeldung: 28.04.2021
(73) Patentinhaber: Steinberg Media Technologies GmbH, 20097 Hamburg (DE)
(72) Erfinder: Simmerlein, Frank-Ulrich, 21033 Hamburg (DE)
(74) Vertreter: Raffay & Fleck

(56) Entgegenhaltungen:
- WO-A1-2018/112632
- WO-A2-2014/096861
- US-A1- 2018 077 276

## Beschreibung

Die vorliegende Erfindung betrifft ein Verfahren zur Steuerung einer synchronen, verteilten Abgabe von Licht innerhalb eines Veranstaltungsgeländes, insbesondere während einer audio-visuellen Performance, insbesondere Live-Performance. Im Allgemeinen ist es heutzutage üblich, dass ein Künstler versucht, im Rahmen seiner audio-visuellen Performance das Publikum dieser Performance möglichst aktiv an dieser teilnehmen zu lassen, insbesondere auch das Publikum aktiv in die Performance zu integrieren. So erfreuen sich beispielsweise die sogenannten Flashmobs, wie beispielsweise das gleichzeitige Erstarren von etwa 200 Menschen an einem Bahnhof in New-York City für fünf Minuten, seit Anfang des 20. Jahrhunderts einer steigenden Beliebtheit. Es besteht demnach ein Bedürfnis der Menschen an der Performance selbst teilzunehmen, insbesondere sich in diese zu integrieren. Ein anderes Beispiel dafür, wie das Publikum einer audio-visuellen Performance zur aktiven Teilnahme aufgefordert wird, bildet die Interaktion eines Musikers oder einer Band während eines Live-Konzerts. Nicht selten wird das Publikum hierbei zum Singen einzelner Textpassagen angeregt oder zum Beispiel dazu aufgefordert, ein Feuerzeug in die Luft zu halten oder bei einer Choreographie mitzuwirken.

Es besteht demnach ein steigendes Bedürfnis eine interaktive Teilnahme des Publikums einer audio-visuellen Performance an dieser zu ermöglichen, um so insbesondere die Performance aus Sicht des Publikums möglichst interessant zu gestalten.

Die WO 2018/213171 A1 beschreibt hierbei ein Verfahren zum Versenden von Echtzeit-Daten in einem Netzwerk, so verwendet zur Übertragung von Audio-Daten an ein mobiles Audiowiedergabegerät eines Konzertbesuchers während eines Live-Konzerts. Hierbei liegt der Fokus hauptsächlich die Live-Musik einer Live-Performance mit einer möglichst geringen Latenz an die mobilen Audiowiedergabegeräte der Konzertbesucher zu übertragen, um beispielsweis dem Teilnehmer die Audiodarbietung mittels Kopfhörer in der gewünschten Lautstärke darzubieten. So beschäftigt die WO 2018/213171 A1 sich insofern mit einem "Live-Streaming" der Audiodateien innerhalb eines Konzerts an zumindest einen Teil der Konzertbesucher, insbesondere aber auch mit einem Streaming über das Internet o.Ä., obgleich auch die Möglichkeit angesprochen wird, diese Audiodateien mit einer Video-Datei, zum Beispiel einer Videoaufnahme des Konzerts, zu synchronisieren, insbesondere auch unter dem Aspekt dieses über das Internet o.Ä. einem Benutzer unabhängig der Anwesenheit bei dem Konzert zugänglich zu machen. Eine Synchronisation der einzelnen mobilen Audiowiedergabegeräte untereinander wird hingegen nicht explizit behandelt.

Im Stand der Technik lassen sich viele weitere Schriften finden, welche sich mit dem grundsätzlichen Konzept der Synchronisation bei der Generierung von Audio- und/oder anderen Multimedia-Dateien befassen. So beschreibt beispielsweise die US 709080 B2 ein Verfahren zur Synchronisation des Audio-Inputs mehrerer Musiker zu einem synchronen Audio-Output im Hinblick auf Live-Performances. Der erzeugte synchrone Audio-Output wird hierbei an die End-Benutzer verteilt, wobei bezüglich dieser Verteilung keine weiteren Angaben zu finden sind.

Hingegen beschreibet beispielsweise die WO 2008/010229 A1 ein Streaming eines Multimedia-Signals zwischen der Quelle und den Endgeräten. Eine Synchronisation eines Endgeräts mit der Quelle wird hierbei durch den Einsatz von Zeitstempel im Bezug auf eine Referenz-Zeit einer Uhr sowie den periodischen Abgleich dieser erreicht.

Bei all diesen Schriften steht vor allem die Übertragung von Audio-Dateien im Vordergrund, sodass beispielsweise ein aktives Einbinden bzw. Einbringen von Konzertbesuchern bei einem Live-Konzert nicht thematisiert wird. Die US 2005/0275626 A1 und die EP 1 729 615 B1 befassen sich hingegen mit einer Möglichkeit zur computerbasierten Lichtsteuerung, insbesondere jedoch auch im Hinblick auf die Übertragung von Video-Signalen, in einem Netzwerk durch eine zentrale Steuereinheit über ein Benutzer-Interface, wobei der Benutzer hierbei nicht der Konzertbesucher, sondern ein Lichttechniker o.Ä. ist. Die grundsätzliche Idee, beispielsweise eine Mehrzahl von Geräten der Konzertbesucher ebenfalls in die Lichtsteuerung einzubinden wird jedoch zumindest insofern angesprochen, dass Videosignal o.Ä. an ein Mobiltelefon oder ein ähnliches elektronisches Gerät eines Nutzers gesendet werden können. Auch hier wird der Besucher einer audio-visuellen Performance demnach nicht in diese integriert bzw. zur interaktiven Teilnahme angeregt bzw. befähigt.

Eine deutlich größere Einbindung der Zuschauer wird in der US 2014/0184386 A1 beschrieben. Diese befasst sich mit einem Leuchtarmband, welches an die Besucher eines Konzerts oder einer anderen Live-Performance oder audio-visuellen Performance verteilt werden können. Die Armbänder beinhalten hierbei einen Empfänger und einen Speicher, auf welchem Informationen zu bestimmten Beleuchtungsmustern gespeichert sind, die mittels des Empfängers aktiviert werden können und ein Leuchten des Armbands bewirken können. So kann durch Senden eines Aktivierungscodes das Armband mittels der gespeicherten Informationen zum Leuchten gebracht werden. Ein einwirken des Konzertbesuchers ist indes jedoch ebenfalls nicht möglich. Zudem ist das Vorhalten und Verteilen der Armbänder erforderlich.

Die Dokumente WO 2014/096861 A2, US 2018/077276 A1 und WO 2018/112632 A1 beschreiben weitere aus dem Stand der Technik bekannte Verfahren zur Einbindung von Besuchern von Live-Konzerten unter Verwendung Ihrer Mobilfunkgeräte.

Die zu lösende Aufgabe liegt demnach in einer stärken Einbindung des Besuchers einer audio-visuellen Performance zu erreichen auch ohne eine Vielzahl spezieller Geräte verteilen zu müssen, dies insbesondere dahingehend den Besucher aktiv in das Konzept der Abgabe von Licht während einer audio-visuellen Performance zu integrieren und diesen als aktives Element in die gesamte audio-visuelle Performance einzubinden.

Gelöst wird die Aufgabe durch ein Verfahren nach Anspruch 1. Vorteilhafte Weiterbildungen können den Ansprüchen 2 bis 15 entnommen werden.

Mit Hilfe des erfindungsgemäß Verfahren wird eine synchrone, verteilte Abgabe von Licht innerhalb eines Veranstaltungsgeländes, insbesondere während einer audio-visuellen Performance, insbesondere Live-Performance, mittels eines Steuerungssystems gesteuert Die Abgabe von synchronem, verteiltem Licht erfolgt hierbei durch eine Mehrzahl tragbarer persönlicher Geräte, insbesondere Smartgeräte, insbesondere Smartphones und/oder Tabletts, beinhaltend jeweils mindestens ein Leuchtmittel, insbesondere Display. Insbesondere beträgt die Mehrzahl mindestens einhundert. Das Steuerungssystem kann insbesondere einen Sequenzer und/oder ein Steuergerät und/oder Mittel, die einen Zugang der Mehrzahl tragbarer persönlicher Geräte zu einem Netzwerk, insbesondere Funknetzwerk, insbesondere zur Konfiguration des Zugangs, zur Konfiguration der Mehrzahl tragbarer persönlicher Geräte, zur Abgabe und/oder zum Erhalt von Daten und/oder Informationen, ermöglichen, beinhalten. Ferner ist das Steuerungssystem ausgebildet, die Abgabe von Licht durch die Mehrzahl tragbarer persönlicher Geräte zu steuern und/oder zu synchronisieren. Darüber hinaus ist das Steuerungssystem, insbesondere der Sequencer und/oder das Steuergerät, zudem eingerichtet, mittels dem Funknetzwerk, insbesondere über ein Mobilfunknetz, insbesondere via Internet, mit den tragbaren persönlichen Geräten zu kommunizieren.

Des Weiteren werden die mobilen Geräte zur Entgegennahme, insbesondere Umsetzung, von Steueranweisungen des Steuerungssystems über das Funknetzwerk, insbesondere in die synchrone, verteilte Abgabe von Licht umzusetzen, eingerichtet. Das Einrichten eines jeden der tragbaren persönlichen Geräte wird durch eine Kontaktaufnahme des jeweiligen tragbaren persönlichen Geräts zum Steuerungssystem, insbesondere zu dem mindestens einen Funknetzwerk, insbesondere durch Verbinden mit dem Funknetzwerk, angestoßen. Das Einrichten kann insbesondere auch die Anmeldung und/oder Konfiguration des tragbaren, persönlichen Geräts in dem Funknetzwerk umfassen, insbesondere zumindest auch mittels einer, insbesondere auf einem Smartgerät gespeicherten, App und/oder mittels einer Web-Applikation, insbesondere durch Anmeldung bei dieser, und/oder das Erfassen und/oder Einscannen eines Codes, wobei die Anmeldung und/oder Konfiguration insbesondere durch den Benutzer initiiert wird, dabei kann aber auch nach dem initiieren beispielsweise durch Erfassen eines Codes eine Pause bis zur Einrichtung vergehen und das Ende der Pause beispielsweise dadurch gegeben sein, dass das tragbare Gerät Kontakt mit dem Funknetzwerk etablieren kann. Im Rahmen der Kontaktaufnahme und/oder Einrichtung kann dem tragbaren persönlichen Gerät insbesondere eine IP zugewiesen werden. Dies ist aber nicht erforderlich. Das einrichten kann beispielsweis auch durch andere Maßnahmen, wie beispielsweise das Mitteilen eines Servers zum Abruf der Informationen und/oder zur Synchronisation eines Zeitgebers bestehen oder dies umfassen Auch kann zur Einrichtung der tragbaren persönlichen Geräte insbesondere nicht nur ein lokales Funknetzwerk sondern auch ein reguläres Mobilfunknetz verwendet werden, insbesondere zur Übermittlung einer Grundkonfiguration, beispielsweise beinhaltenten einen Netzwerknamen und/oder eine Serveradresse des Steuerungssystems und/oder lokalen Funknetzes. Das Einrichten ist insbesondere insoweit zu verstehen, dass das Steuerungssystem durch die Kontaktaufnahme, welche insbesondere aktiv durch die Besitzer der tragbaren, persönlichen Geräte, geschieht, befähigt wird, Informationen an die tragbaren, persönlichen Geräte zu übermitteln, insbesondere Anweisungen an die tragbaren, persönlichen Geräte zu senden, insbesondere Funktionen der tragbaren, persönlichen, insbesondere durch den Besitzer ausgewählt, zu kontrollieren, wobei die tragbaren, persönlichen Geräte diese Informationen und/oder Anweisungen, insbesondere automatisch, umsetzen, insbesondere ohne, dass der Besitzer dies noch genehmigen und/oder anweisen muss. Mit großen Vorteil handelt es sich hierbei insbesondere um die Kontaktaufnahme durch Anmelden, insbesondere durch Scannen eines Codes, insbesondere aufgedruckt auf einer Eintrittskarte, mit Hilfe und/oder in einer App, welche insbesondere durch die Anmeldung in dem Funknetzwerk auf die tragbaren, persönlichen Geräte übertragen und/oder gespeichert wird oder bereits vor Anmeldung in dem Funknetzwerk auf den tragbaren, persönlichen Geräten gespeichert wurde. Durch diese Anmeldung wird dann insbesondere ein Informationsaustausch zwischen Steuerungssystem und tragbaren, persönlichen Geräten ermöglicht.

Die synchrone, verteilte Abgabe von Licht durch die Mehrzahl tragbarer persönlicher Geräte wird durch Übertragung von mindestens einer ersten Information zur zeitlichen und mindestens einer zweiten Information zur farblichen Steuerung der Abgabe von Licht von dem Steuerungssystem über das Funknetzwerk an die Mehrzahl tragbarer, persönlicher Geräte bewirkt.

In einer vorteilhaften Ausgestaltungsform ist das Steuerungssystem mit einer Funkbasisstation verbunden und/oder beinhaltet es eine solche Funkbasisstation, wobei die Funkbasisstation eingerichtet ist, mittels dem Funknetzwerk mit den tragbaren persönlichen Geräten zu kommunizieren, wodurch das Steuerungssystem eingerichtet wird, über die Funkbasisstation mittels des Funknetzwerks mit den tragbaren persönlichen Geräten zu kommunizieren. Insbesondere ist die Funkbasisstation vorteilhafterweise geeignet und/oder eingerichtet, mit der Mehrzahl tragbarer persönlicher Geräte ein, insbesondere nur lokales, insbesondere im Wesentlichen oder ganz auf Veranstaltungsgelände und/oder ein Gebiet in einem Kreis mit einem Radius kleiner 5 km, insbesondere kleiner 1km, insbesondere kleiner 500m, beschränkte, Funknetzwerk auszubilden. Das lokale Funknetz ist insbesondere autark und/oder insbesondere ermöglicht es kein Roaming und/oder keine Übergabe zum über lokalen und/oder Mobilfunknetz. Ansich kann das Funknetz aber auch ein Mobilfunknetz, insbesondere ein 4G und/oder 5G Netz sein.

Mit besonderem Vorteil ist die mindestens eine erste Information zur zeitlichen Steuerung der Abgabe von Licht ein Zeitpunkt zum Start der Abgabe von Licht und/oder zum Start einer Routine zur Abgabe von Licht. Dieser Zeitpunkt kann ein zukünftiger sein oder der aktuelle, auch als unmittelbarer Zeitpunkt bezeichnet, sein, sodass die erste Information eine Anweisung zur sofortigen Abgabe von Licht und/oder zum sofortigen Start der Routine zur Abgabe von Licht ist, oder ein zeitlich späterer Zeitpunkt, insbesondere eine Uhrzeit oder ein zeitliches Intervall bezogen auf eine definierte Zeit oder einen definierten Zeitpunkt sein, sodass die erste Information den Zeitpunkt zur Abgabe von Licht und/oder zum Start der Routine zur Abgabe von Licht festlegt, insbesondere gegenüber einer synchronisierten Uhr, wobei dieser Zeitpunkt insbesondere in der Zukunft liegt und die Abgabe von Licht und/oder der Start der Routine zur Abgabe von Licht insbesondere in einem zeitlichen Intervall oder zu einem Zeitpunkt, insbesondere einem Zeitpunkt oder einer Uhrzeit, durch die erste Information definiert wird. Wird durch die erste Information ein zukünftiger Zeitpunkt und/oder eine zukünftige Uhrzeit definiert, ist insbesondere eine vorherige, Synchronisation der Uhren von Steuerungssystem und tragbaren, persönlichen Geräten von Vorteil und/oder es ist vorteilhaft, eine Differenz zwischen den Uhren zu ermitteln und/oder zu berücksichtigen, insbesondere den Zeitpunkt und/oder die Uhrzeit an diese Differenz anzupassen.

Zusätzlich oder alternativ beinhaltet die mindestens eine zweite Information mindestens einen Parameter, der mindestens eine Eigenschaft des Lichts angibt, insbesondere Farbe und/oder Intensität, und/oder definieren die mindesten eine erste und die mindesten eine zweite Information zusammen den zeitlichen Ablauf der Abgabe von Licht, insbesondere unterschiedlicher Farbe, und/oder eine Routine zur zeitlichen Abfolge der Abgabe von Licht, insbesondere unterschiedlicher Farbe, sowie deren Begin.

Routinen können hierbei mehrfach verwendet werden und/oder können, insbesondere zu zeitlich späteren Starts, insbesondere eines nochmaligen Starts nachdem die Routine bereits einmal gestartet wurde, auf den tragbaren, persönlichen Geräten vorteilhafterweise gespeichert werden. Mit Vorteil werden die Routinen beim Einrichten der tragbaren, persönlichen Geräte, und/oder zumindest 100 ms vor dem gewünschten Zeitpunkt zur Abgabe von Licht auf diese übertragen und/oder auf diesen gespeichert, sodass diese durch eine unmittelbare Anweisung oder an einen übermittelten Zeitpunkt, insbesondere einer Uhrzeit, gestartet werden können, ohne dass eine Übertragung der gesamten Routine zum Zeitpunkt der geplanten Ausführung nötig ist. Dies ist vor allem vorteilhaft, da auf diesem Wege die Komplexität der durch das Steuerungssystem zu bestimmten Zeiten zu übertragenen Informationen reduziert werden kann, da die zum Start der Routine nötige Information ein einfacher Aktivierungscode sein kann. Dies ist insbesondere dann relevant, wenn zur Übermittlung von Daten und/oder Informationen in dem Funknetzwerk nur eine begrenzte Netzkapazität zur Verfügung steht und insbesondere die Mehrzahl der tragbaren, persönlichen Geräte groß ist, wobei hierbei das Verhältnis zwischen Netzkapazität und Mehrzahl der tragbaren, persönlichen Geräte von besonderer Relevanz ist.

Mit Vorteil wird die zweite Information, der zeitliche Ablauf, die Routine zur Abgabe von Licht und/oder der mindestens eine Parameter des Lichts vom Steuerungssystem aus über das Funknetzwerk auf die tragbaren, persönlichen Geräten übertragen und insbesondere auf den tragbaren, persönlichen Geräten gespeichert. Vorteilhafterweise wird insbesondere zumindest eine Farbe als Parameter des abzugebenden Lichts gespeichert. Das Steuerungssystem sendet, insbesondere überträgt, dann eine Startanweisung zum Auslösen der gespeicherten Routine zur Abgabe von Licht und/oder zum Verwenden der Parameter des Lichts zur Abgabe von Licht über das Funknetzwerk an die tragbaren, persönlichen Geräte, wobei insbesondere die erste Information eine Startanweisung ist oder beinhaltet und die Startanweisung insbesondere für den Fall, dass mehrere zweite Informationen, zeitliche Abläufe, Routinen zur Abgabe von Licht und/oder Parameter des Lichts auf den tragbaren persönlichen Geräten gespeichert wurden, zusätzlich beinhaltet, welche der mehreren gespeicherten zweite Informationen, zeitliche Abläufe, Routinen zur Abgabe von Licht und/oder Parameter des Lichts mittels der ersten Information verwendet und/oder ausgelöst werden soll. Die Startanweisung kann eine Anweisung zur Abgabe von Licht oder zu einem Starten einer gespeicherten und/oder zuvor gesendeten und/oder übertragenen Routine zur Abgabe von Licht und/oder zur Verwendung der Parameter des Lichts an einem durch die Startanweisung definierten und/oder durch die Startanweisung übermittelten Zeitpunkt beinhalten. Beinhaltet die Startanweisung einen definierten und/oder durch die Startanweisung übermittelten Zeitpunkt, so ist dieser insbesondere auf die Latenzen bei der Übertragung innerhalb des Funknetzwerkes abzustimmen und sollte dieser Zeitpunkt mehr als die zu erwartende, insbesondere mehr als das doppelte der zu erwartenden, Latenz nach dem Zeitpunkt des Beginns der Übermittlung liegen. So kann der definierte und/oder durch die Startanweisung übermittelte Zeitpunkt beispielsweise dahingehend gewählt werden, dass bei einer Latenz von 100 ms innerhalb des Funknetzwerks die erste Information, die zweite Information, der zeitliche Ablauf, die Routine zur Abgabe von Licht und/oder der mindestens eine Parameter des Lichts vom Steuerungssystem aus über das Funknetzwerk mindestens 250 ms vor dem gewünschten Zeitpunkt zur Abgabe von Licht auf die tragbaren, persönlichen Geräten gesendet wird. Alternativ kann die Startanweisung eine Anweisung zu einer unmittelbaren, insbesondere sofortigen, Abgabe von Licht beinhalten oder zu einem unmittelbaren, insbesondere sofortigen, Starten der gespeicherten Routine zur Abgabe von Licht und/oder zur unmittelbaren, insbesondere sofortigen, Verwendung der Parameter des Lichts darstellen.

Wenn die Kapazitäten des verwendeten Funknetzwerkes dahingehend beschränkt sind, dass eine, insbesondere zeitgleiche, Übertragung des zeitlichen Ablaufs und/oder der Routine aufgrund der beschränkten Kapazität nicht gewährleistet werden kann, da zur Übertragung solcher Routinen und/oder Abläufe eine deutlich größere Netzkapazität im Vergleich zur Übertragung eine Startanweisung, insbesondere einen Start-Codes, benötigt wird, ist es von besonderem Vorteil, wenn die Routine zur Abgabe von Licht und/oder der Parameter des Lichts auf den tragbaren persönlichen Geräten gespeichert ist, insbesondere deutlich vor deren Verwendung, beispielsweise mindestes 30 Sekunden vor deren Verwendung gesendet wird und/oder durch das Einrichten der tragbaren persönlichen Geräte in dem Funknetzwerk, insbesondere durch das Steuerungssystem, auf die tragbaren persönlichen Geräte übertragen und/oder an diese gesendet und/oder bereits vor Anmeldung in dem Funknetzwerk mittels der, insbesondere auf dem Smartphone gespeicherten, App und/oder mittels der Web-Applikation auf den tragbaren persönlichen Geräten, insbesondere durch Herunterladen aus dem Internet, Steuerungssystem und/oder Funknetz, gespeichert wurde. In der Folge kann dann durch die Startanweisung die gespeicherte Routine zur Abgabe von Licht gestartet und/oder ausgeführt werden und/oder der gespeicherte Parameter des Lichts verwendet werden. Auch hier kann der Zeitpunkt der Übertragung der Startanweisung insbesondere an die Latenz im Funknetzwerk angepasst werden, die Startanweisung insofern mindestens 100 ms vor dem gewünschten Zeitpunkt zur Abgabe von Licht übertragen werden. Eine Startanweisungen, die einen Zeitpunkt als Start zur Abgabe von Licht als Information relativ zu einem Zeitgeber definiert, kann sinnvollerweise auch noch nach dem darin definierten Zeitpunkt als Wiederholung gesendet werden. Dies ermöglich es beispielsweise tragbaren Geräten, die die eine oder mehreren Sendung(en) vor dem Zeitpunkt verpasst haben, die zu startende Routine teilweise aber vollständig synchron auszuführen, indem es bei erhalt der Startanweisung berechnet, mit welchem Teil der Routine es nun zu beginnen hat, um diesen synchron umzusetzen.

Auch ist es möglich durch eine vom Steuerungssystem gesendete und insbesondere an die tragbaren Geräte übermittelte, Änderungsanweisung in Form einer dritten Information, die insbesondere zumindest einen Zeitpunkt, unmittelbar oder zukünftig, definiert, in eine bereits gestartete Routine einzugreifen und diese durch weitere Anweisungen zu modifizieren. So können insbesondere Routinen und/oder Abläufe Schleifen aufweisen, die dazu führen, dass eine Sequenz mehrfach oder unendlich oft wiederholt wird, sofern die Schleife nicht unterbrochen wird, und der weitere Teil der Routine und/oder Abfolge erst nach Verlassen der Schleife ausgeführt werden. Auch kann die Routine so ausgestaltet sein, dass bei einer vorgegebenen Anzahl von Wiederholungen der Schleife (auch Abbruchanzahl), die Ausführung der Routine vollständig gestoppt wird, die Routine aber bei Empfang einer Änderungsanweisung zum Verlassen der Schleife vor dem Erreichen der vorgegebenen Abbruchanzahl weiter ausgeführt wird. Dadurch lässt sich die Routine z.B. an im Vorfeld in ihrer Dauer nicht genau bestimmten Performanceteile, beispielsweise Soli, anpassen.

Die Anweisungen bzw. erste und/oder zweite Information können auch durch die Übermittlung der Daten zur Anzeige einer Webseite realisiert werden, insbesondere wenn die Webseite so aufgebaut ist, dass sich die Anzeige mit der Zeit ändert. So kann die Webseite eine farbige Fläche darstellen, deren Farben und/oder Helligkeit mit der Zeit durch Übermittlung entsprechender Daten zur Anzeige der Webseite geändert wird. Dies ermöglicht eine besonders einfache Umsetzung, bei der die Geräte lediglich eine Webseite aufrufen und anzeigen und dadurch die Informationen zur Anzeige erhalten und insbesondere keine dedizierte Software auf den Geräten notwendig ist. Gruppen und/oder Untergruppen lassen sich dann beispielsweise euch unterschiedliche Webseiten und/oder URLs, die aufgerufen werden realisieren. Die Informationen dazu, welche Webseite durch das jeweilige Gerät aufzurufen ist, kann beispielsweise auf einer Eintrittskarte codiert und/oder durch eine Platznummer bestimmt sein und manuell in das gerät eingegeben und/oder von diesem eingelesen werden.

Ferner kann auch ein Schleifenzähler vorgesehen sein, welcher die Wiederholungen der Routinen und/oder Abläufe erfasst und/oder diese mit einem Maximalwert für die Anzahl der Wiederholungen vergleicht. Erreicht in der Folge die Anzahl der Wiederholungen den Maximalwert, so kann die Schleife, insbesondere die Wiederholung der Routine und/oder des Ablaufs, beendet werden. Dies dient insbesondere einer sicheren Beendigung der Schleife für den Fall, dass die Anweisung zum Beenden der Schleife nicht empfangen und/oder nicht gesendet und/oder übertragen wurde. Ein weiters Beispiel kann die Anpassung einer Routine und/oder eines Ablaufs zur Abgabe von Licht an einen von der ursprünglichen Planung abweichenden zeitlichen Verlauf der audio-visuellen Performance sein, so zum Beispiel durch flexible, ungeplante und/oder spontane Interaktion eines Musikers mit dem Publikum innerhalb des Veranstaltungsgeländes oder während eines Solos o.Ä.

Insbesondere initialisiert und/oder beginnt das Steuerungssystem die Übertragung der ersten und/oder der zweiten Information mindestens 100 ms, insbesondere mindestens 500 ms, vor dem durch die Startanweisung definierten Zeitpunkt und/oder beginnt mit einem solchen zeitlichen Vorlauf, dass bei störungsfreiem Ablauf mit einem Abschluss der Übertragung der ersten und/oder der zweiten Information mindestens 100 ms, insbesondere mindestens 500 ms, vor dem durch die Startanweisung definierten Zeitpunkt zu rechnen ist. Der zeitliche Vorlauf ist insofern durch die zeitliche Dauer und/oder das zeitliches Intervall gegeben, welche(s) zwischen dem Senden und/oder Übertragen der ersten und/oder zweiten Information durch das Steuerungssystem und dem Empfangen und/oder Verarbeiten der ersten und/oder zweiten Information an einem der und/oder der Mehrzahl der tragbaren, persönlichen Geräte verstreicht. Insofern beinhaltet der Vorlauf die Zeitdauer der Informationsübertragung und/oder -verarbeitung. Insofern können bei der Festlegung des zeitlichen Vorlaufs insbesondere die Latenzen, welche bei einer Signalübertragung in Funknetzwerken auftreten, beachtet werden. Mit besonderem Vorteil wird der Vorlauf dahingehend gewählt, dass ein mehrfaches Übertagen und/oder Senden der Startanweisung, insbesondere vor dem definierten Startzeitpunkt, möglich ist und insbesondere auch durchgeführt wird, beispielsweise mehrfach für alle Geräte oder mehrfach in dem Sinne, dass nacheinander Übertragungen an unterschiedliche Geräte und/oder Gerätegruppen durchgeführt werden. Das mehrfache Senden, insbesondere vor dem definierten Startzeitpunk, an die gleichen Geräte bietet den Vorteil, ein Übertagen der Startanweisung an möglichst alle tragbaren persönlichen Geräte sicherzustellen. Dies ist insbesondere dann wichtig, wenn die Mehrzahl der tragbaren persönlichen Geräte so hoch und/oder die Startanweisung(en) so komplex sind, dass die Netzkapazität nicht ausreicht, um eine simultane Übertragung und/oder ein simultanes Senden der Anweisung(en) an alle tragbaren persönlichen Geräte während eines einzelnen Sende- und/oder Übertragungsvorgangs zu ermöglichen und/oder gewährleisten und/oder die Funkverbindung so unzuverlässig ist, dass mit einfachem Senden, nicht eine Übertragung an alle oder zumindest an eine ausreichende Anzahl, insbesondere mehr als 70% der Mehrzahl sichergestellt werden kann. Wird demnach mit dem Übertragen und/oder Senden der Startanweisung frühzeitig begonnen, so ermöglicht dieser ausreichende Vorlauf eine mehrfache Übertragung und/oder ein mehrfaches Senden. Insbesondere kann hierbei auch vorgesehen sein, dass die tragbaren persönlichen Geräte die Anweisungen durch Kommunikation mit der Steuerungseinheit anfordern und/oder den Erhalt der Anweisung an das Steuerungssystem kommunizieren und/oder diesem bestätigen. Eine Anforderung der Anweisung durch die persönlichen tragbaren Geräte kann insbesondere dann vorgesehen sein, wenn diese in einem definierten zeitlichen Abstand keine neue, wiederholte und/oder bestätigende Anweisung empfangen haben, so beispielsweise auch bereits während der Ausführung einer Routine und/oder eines Ablaufs zur Abgabe von Licht, wenn das tragbare persönliche Gerät in einem definierten Zeitlichen Abstand zum zeitlichen Endpunkt der Routine und/oder des Ablaufs keine Anweisung empfangen wurde, inwiefern nach Beendigung der Routine und/oder des Ablaufs die Routine und/oder der Ablauf wiederholt und/oder neugestartet und/oder eine anderen Routine und/oder Ablauf gestartet werden soll. Ist beispielsweise eine Startanweisung zur Abgabe von Licht unter Verwendung eines vorgespeicherte Parameters des Lichts sowie eine Anweisung zur Beendigung der Abgabe von Licht vorgesehen, so kann vorgesehen sein, dass die tragbaren persönlichen Geräte eine Anweisung durch Kommunikation mit dem Steuerungssystem anfordern, wenn in einem definierten zeitlichen Abstand keine Anweisung zur Beendigung und oder zum Ändern des Parameters des Lichts und/oder eine Bestätigung erhalten wurde. Auch lassen sich die beiden vorverstehenden Beispiele miteinander kombinieren, insbesondere sind die Ausführungsformen dahingehend nicht auf die Beispiele beschränkt.

In einer besonders vorteilhaften Weiterbildung des Verfahrens werden die Mehrzahl tragbarer persönlicher Geräte in N Gruppen unterteilt. N beträgt mindestens zwei und jede der N Gruppen beinhaltet insbesondere mindestens fünfzig tragbare persönliche Geräte.

Vorteilhafterweise erfolgt die Unterteilung in N Gruppen basierend auf der Position der tragbaren persönlichen Geräte innerhalb des Veranstaltungsgeländes. Die Position der tragbaren persönlichen Geräte wird hierbei insbesondere bestimmt
i. mittels eines Sitzplatzes und/oder einer Sitzplatzbezeichnung, wobei insbesondere zur Erfassung und/oder Zuweisung des Sitzplatzes und/oder der Sitzplatzbezeichnung ein Code verwendet wird, wobei der Code insbesondere ein, insbesondere auf einer Eintrittskarte und/oder, insbesondere unmittelbar, auf/an dem Sitzplatz angebrachter, Barcode, QR-Code und/oder RFID-Tag ist, und/oder
ii. mittels Triangulation und/oder Entfernungsmessung zwischen den tragbaren persönlichen Geräten und mindestens zwei, insbesondere ortsfesten, Basisstationen und/oder Funkantennen innerhalb des Veranstaltungsgeländes, und/oder
iii. mittels Satelliten und/oder Beacon gestützter Ortung, beispielsweise GPS, und/oder
iv. mittels Erfassung von Zugangspunkten, insbesondere Funkantennen, an welchen die tragbaren persönlichen Geräte Zugang zu dem Funknetzwerk erhalten und/oder sich in das Funknetzwerk einwählen und/oder einloggen, und/oder
v. mittels Ermittlung jeweils benachbarter Funknetzwerkteilnehmer, insbesondere tragbarer persönlicher Geräte, insbesondere durch die tragbaren persönlichen Geräte, beispielsweise mittels Nahfeldkommunikation und/oder Funkkommunikation, beispielsweise mittels Bluetooth und/oder Entfernungsmessung zwischen den tragbaren Geräten und/oder basierend auf Fotos aus Kameras der tragbaren Geräte.

Eine erste Anzahl tragbarer persönlicher Geräte, die benachbart sind, insbesondere eine maximale Entfernung zu einem räumlichen Schwer- und/oder Mittelpunkt einer Gruppe nicht überschreitet, insofern benachbarte persönliche Geräte nicht nur die einander räumlich nächsten Geräte sind sondern alle tragbaren persönlichen Geräte innerhalb der Entfernung um den Schwerpunkt- und/oder Mittelpunkt sein können, und/oder deren Positionen in einer ersten geografischen Zone, insbesondere beispielsweise innerhalb eines abgegrenzten Sitzblocks, innerhalb des Veranstaltungsgeländes liegen und/oder welche über eine erste Basisstation und/oder Funkantenne Zugang zu dem Funknetzwerk erhalten und/oder sich in das Funknetzwerk einwählen und/oder einloggen, wird hierbei einer ersten Gruppe der N Gruppen zugeordnet. Eine zweite Anzahl tragbarer persönlicher Geräte, die benachbart sind und/oder deren Positionen in einer zweiten geografischen Zone innerhalb des Veranstaltungsgeländes liegen, und/oder welche über eine zweite Basisstation und/oder Funkantenne Zugang zu dem Funknetzwerk erhalten und/oder sich in das Funknetzwerk einwählen und/oder einloggen, wird einer zweiten Gruppe der N Gruppen zugeordnet. Dies kann insbesondere für die weiteren der N Gruppen entsprechend fortgesetzt werden.

Mit besonderem Vorteil wird die Abgabe von Licht durch die tragbaren persönlichen Geräte innerhalb mindestens einer, insbesondere mehrerer, insbesondere jeder der N Gruppen, insbesondere abweichend von tragbaren persönlichen Geräte innerhalb anderer Gruppen der N Gruppen, synchronisiert und/oder ausgestaltet, wobei sich die Abgabe von Licht durch eine erste Gruppe der N Gruppen zeitlich, insbesondere bezogen auf einen Startzeitpunkt zur Abgabe von Licht, und/oder der Abfolge und/oder bzgl. mindestens eines Parameters des Lichts (insbesondere Farbe und/oder Intensität) von der Abgabe von Licht durch mindestens eine zweite Gruppe der N Gruppen unterscheidet.

Zusätzlich können innerhalb der N Gruppen und/oder innerhalb der Mehrzahl der tragbaren persönlichen Geräte vorteilhafterweise X Untergruppen definiert werden. Zur Zuordnung der tragbaren persönlichen Geräte innerhalb einer der N Gruppen und/oder der Mehrzahl der tragbaren persönlichen Geräte zu einer der X Untergruppen wird die Position der tragbaren persönlichen Geräte innerhalb der Gruppe und/oder der Mehrzahl tragbarer persönlicher Geräte, insbesondere relativ zueinander, analysiert, insbesondere in Bezug auf deren Reihenfolge, Nachbarschaft und/oder räumliche Verteilung innerhalb der einen Gruppe der N Gruppen und/oder der Mehrzahl der tragbaren persönlichen Geräte, insbesondere analog einer oder mehrerer der Methoden i bis v zur Zuordnung der persönlichen tragbaren Geräte in die N Gruppen, oder mittels von den tragbaren Geräten ausgesandter Lichtidentifikationskennungen (beispielsweise Licht- und/oder Blinkmuster, die mittels mindestens einer mit dem Steuerungssystem verbundenen Kamera erfasst werden erfolgt. Insbesondere wird zunächst mindestens eine Gruppe der Mehrzahl der tragbaren Geräte definiert, die dann angewiesen wird, mittels eines Leuchtmittels, insbesondere Displays, eine Identifikationskennung abzugeben. Wird die Identifikationskennung mittels mindestens einer Kamera des Steuerungssystems erfasst und Position des tragbaren Geräts, wie oben beschrieben oder bestimmt mittels der mindestens einen Kamera, kann die Position einzelner tragbarer Geräte bestimmt und können dadurch differenzierte Lichtmuster erzeugt werden.

Die Zuordnung zu den X Untergruppen erfolgt insbesondere alternierend, segmentweise und/oder in einem, insbesondere strukturierten, Muster. Diese Zuordnung in Untergruppen ermöglicht das Erzeugen von verschiedenen strukturierten Bildern und/oder visuellen Effekten mittels der Abgabe von Licht. So kann beispielsweise durch Zuordnung in Segmente und eine zeitliche versetzte Abgabe von Licht eine Art Wellenbewegung des Lichts erzeugt werden, insbesondere innerhalb einer Gruppe. Denkbar ist ebenfalls, dass sich eine solche Wellenbewegung in eine weitere Gruppe fortsetzt, insbesondere auch zeitlich, sodass sich an die letzte Untergruppe bzw. das letzte Segment einer ersten Gruppe insbesondere das räumlich benachbarte Segment einer nächsten Gruppe zeitlich anschließen kann. Die Zuordnung in Untergruppen die einem komplexeren oder strukturiertem Muster folgt, kann beispielsweise ermöglichen, ein Logo eines Musikers oder einer Musikgruppe oder Ähnliches durch die Lichtabgabe darzustellen. Hierbei sind lediglich die Mehrzahl der tragbaren, persönlichen Geräte sowie die Kapazität der Steuerungseinheit, wie viele Information beziehungsweise Startanweisungen, insbesondere in einer gegebenen Zeitspanne, versendet werden können und/oder die Netzkapazität des Funknetzwerks sowie die Grenzen der Ermittlung der Position limitierend. Die Möglichkeit der Zuordnung von Gruppen und Untergruppen schafft demnach, maximale Flexibilität, sofern nicht durch vorstehend beschriebe Grenzen limitiert, in Bezug auf eine Ausgestaltung und/oder Planung der räumlich verteilte, synchrone Abgabe von Licht und/oder der Routinen zur Abgabe von Licht durch die tragbaren, persönlichen Geräte, sodass bei jeder audio-visuellen Performance eine auf das Veranstaltungsgelände und/oder die Anzahl der tragbaren, persönlichen Geräte und/oder insbesondere auf die audio-visuelle Performance selber individuell abgestimmte Abgabe von Licht ermöglicht wird.

Insbesondere kann vorteilhafterweise die Zuordnung der Mehrzahl tragbarer persönlicher Geräte in die N Gruppen und/oder X Untergruppen dahingehende kontrolliert werden, dass die tragbaren persönlichen Geräte eine Kontrollanweisung zur Abgabe von Licht erhalten, wobei die durch die Kontrollanweisung initiierte Abgabe von Licht mittels der Kamera des Steuerungssystems erfasst und anschließend analysiert und insbesondere mit der durch die Kontrollanweisung gewünschten Abgabe von Licht verglichen wird. Diese Kontrollanweisung ist vorzugsweise eine Anweisung zur Abgabe von Licht in einem Kontrollmuster, insbesondere eine zeitlich zwischen den einzelnen Gruppen und/oder Untergruppen separierte Abgabe von Licht. Die separierte Abgabe von Licht kann vorzugsweise ferner einen Code, insbesondere beispielsweise ein Morse-Code, beinhalten.

Auch etwaige fehlerhafte Zuordnungen von tragbaren persönlichen Geräten mittels anderer Verfahren in eine der N Gruppen und/oder X Untergruppen kann dahingehend erkannt und/oder korrigiert werden.

Das Steuerungssystem steuert und/oder bewirkt, insbesondere der Sequencer, eine zeitliche Synchronisation zwischen Lichtabgabe der tragbaren persönlichen Geräten und der audio-visuellen Performance, wobei die synchrone verteilte Abgabe von Licht zeitlich synchronisiert zu einer Abgabe von mindestens einem

Klicktrack, insbesondere auf dem Veranstaltungsgelände, insbesondere der Bühne und/oder mindestens einer Abgabe von Licht durch eine Vielzahl, insbesondere stationärer, Lichtabgabegeräte auf dem Veranstaltungsgelände, insbesondere der Bühne, erfolgt, d.h. zeitlich parallel bzw. synchron gesteuert bezogen auf die Audioausgabe und/oder die Abgabe von Licht durch die Vielzahl Lichtabgabegeräte auf dem Veranstaltungsgelände, insbesondere der Bühne, wobei die Ausgabe und/oder Abgabe insbesondere durch das Steuerungssystem erfolgt. Ein zeitliches synchronisieren der synchronen verteilte Abgabe von Licht zu der Abgabe der mindestens einer Audioausgabe, insbesondere Klicktrack, und/oder der mindestens einer Abgabe von Licht durch die Vielzahl, insbesondere stationärer, Lichtabgabegeräte auf dem Veranstaltungsgelände, insbesondere der Bühne, ermöglicht es, Bühne und Publikum im Sinne der audiovisuellen Gestaltung der Veranstaltungen miteinander zu verknüpfen.. Beispielsweise wäre es denkbar, den Rhythmus und/oder Beat der Audioausgabe aufzunehmen und die Abgabe von synchronem verteiltem Licht innerhalb des Veranstaltungsgeländes zeitlich synchron zu diesem Rhythmus und/oder Beat zu steuern. Die ermöglich vor allem eine starke Einbindung des Zuschauers in die audiovisuelle Performance.

Mit besonderem Vorteil steuert und/oder bewirkt das Steuerungssystem eine zeitliche Synchronisation zwischen der Abgabe von Licht der tragbaren persönlichen Geräten und der audio-visuellen Performance, wobei dies dadurch erreicht wird, dass die synchrone verteilte Abgabe von Licht zeitlich synchronisiert zu einer Abgabe von mindestens einer Instruktion erfolgt. Dies erfolgt insbesondere dadurch, dass die erste und/oder zweite Information so beschaffen und/oder gesendet werden, dass sie eine Synchronisation mit der Instruktion bewirken. Insbesondere wird die mindestens eine Instruktion mindestens einem Musiker mittels eines Displays und/oder eines Kopfhörers dargeboten, wobei die mindestens eine Instruktion insbesondere ein Liedtext, Griffbild, Bewegungsanweisung und/oder ein Takt und/oder Noten und/oder Akkorde und/oder eine Textanweisung und/oder ein Playback und/oder ein, insbesondere optischer, Einzähler ist. Insbesondere ist die erste und/oder zweite Information so ausgebildet, dass sie eine Startanweisung beinhaltet, die zur Instruktion synchronisierten Abgabe von Licht führt, insbesondere so, dass eine durch die Instruktion angewiesene Betonung zur selben Zeit erfolgt wie eine Erhöhung der Intensität der Abgabe von Licht und/oder einer Farbänderung der Abgabe von Licht. Insbesondere ist die Anweisung zur Generierung der Instruktionen mit einer Referenz zu einer Abfolge von Lichtabgabe gespeichert, insbesondere in einem Datensatz und wird diese verwendet, um zeitlich vorausschauend zu bestimmen, wann und in welcher Form eine erste und/oder zweite Information zu senden ist, um zeitlich synchronisiert zu der Ausgabe der Anweisung eine Abgabe von Licht zu erreichen. Insbesondere ist das Steuerungssystem eingerichtet dies zu bestimmen und erste und/oder zweite Informationen zu generieren. Insbesondere ist das Steuerungssystem bzw. das Verfahren ausgebildet eine Startanweisung am Steuerungssystem zum Beginn der Ausgabe von Instruktionen entgegen zu nehmen und daraufhin die Ausgabe der Instruktionen basierend auf dem Datensatz zu beginnen und erste und/oder zweite Informationen basierend auf der Referenz zu generieren und zu senden. Dabei kann auch eine Vorbereitungsphase durchgeführt werden, wobei das Verfahren insbesondere eingerichtet ist eine Anweisung zum Beginn dieser Vorbereitungsphase entgegen zu nehmen, wobei in dieser Vorbereitungsphase bereits vorausschauend erste und/oder zweite Informationen, insbesondere Routinen und/oder Abläufe der Abgabe von Licht generiert und gesendet, insbesondere übertragen, werden, auf die dann nach der Startanweisung mittels erster und/oder dritter Informationen, insbesondere Start- und/oder Änderungsanweisungen zurück gegriffen wird.

Mit besonderem Vorteil kann das Steuerungssystem mit einem Modul zur Generierung mindestens eines Zeitmarkers verbunden sein und/oder mit diesem kommunizieren und/oder ein solches beinhalten, wobei das Modul dazu eingerichtet ist, mittels des Moduls die Audioausgabe zu erfassen und/oder zu analysieren. Durch das Erfassen und/oder Analysieren der Audioausgabe wird der mindestens eine Zeitmarker generiert und im Anschluss an das Steuerungssystem übermittelt. Das Steuerungssystem ist vorteilhafterweise eingerichtet, basierend auf dem mindestens einen Zeitmarker die mindestens eine erste und/oder zweite Information zu generieren und zu senden, insbesondere zu übertragen. Die Erfassung und/oder Analyse der Audioausgabe kann hierbei sowohl mittels manueller Eingabe als auch automatisch erfolgen. Eine Möglichkeit der manuellen Eingabe des Zeitmarkers kann dadurch gegeben sein, dass das Modul beispielsweise von einem Menschen so bedient wird, dass darauf der gespielte und von dem Menschen gehörte Takt getappt wird. Auch kann das Modul direkt mit dem Instrument eines Musikers verbunden sein und/oder dessen Töne aufnahmen und/oder verarbeiten, vorzugsweise mit einem Schlagzeug. Das Modul kann über eine Benutzeroberfläche verfügen, so zum Beispiel durch ein Tablett oder ein anderes Smartgerät mit Touchscreen o.Ä. ausgebildet sein, welche zur Entgegennahme einer manuellen Eingabe eingerichtet ist, sodass beispielsweise durch wiederholtes manuelles Eingeben auf der Benutzeroberfläche, so zum Beispiel durch wiederholtes tippen auf den Touchscreen, der Rhythmus manuell erfasst werden kann. Alternativ kann das Modul über einen Analyser verfügen, welcher die Audioausgabe auf Rhythmus o.Ä. untersucht und auf Basis dieser Analyse den Zeitmarker erzeugt.

In einer weiteren vorteilhaften Ausbildung des Verfahrens beinhaltet das Einrichten das Einbinden in das Funknetzwerk, die Vergabe einer, insbesondere eindeutigen, Identifikation im Funknetzwerk, die Vergabe einer, insbesondere eindeutigen, Adresse im Funknetzwerk und/oder die Bekanntgabe mindestens einer Serveradresse des Steuerungssystems an jedes der tragbaren persönlichen Geräte und/oder die Anweisung eine Zeitsynchronisation, insbesondere mit einem, insbesondere auf dem Veranstaltungsgelände lokalisierten, Zeitserver, insbesondere mittels ntp durchzuführen und insbesondere in definierten Zeitabständen und/oder Zeitfenstern zu wiederholen.

Eine weiter vorteilhafte Ausbildung sieht vor, dass das Verfahren einen Abgleich, insbesondere die Synchronisation von mindestens einem Taktgeber, insbesondere Uhr, des Steuerungssystems mit mindestens einem Taktgeber, insbesondere Uhr, in jedem der tragbaren persönlichen Geräte beinhaltet, insbesondere im Rahmen des Einrichtens und/oder vor dem durch die Startanweisung definierten Zeitpunkt und/oder dass das Verfahren den Abgleich, insbesondere die Synchronisation von mindestens einem Taktgeber, insbesondere Uhr, des Steuerungssystems mit der Zeit mindestens eines öffentlichen Mobilfunknetzes, das auf dem Veranstaltungsgelände empfangbar ist, erfolgt. Durch den Abgleich erhalten die tragbaren persönlichen Geräte einen definierten Bezugszeitpunkt durch den Taktgeber, insbesondere die Uhr, des Steuerungssystems, in dessen Abhängigkeit, folglich in zeitlicher Relation zu diesem, die übermittelten Zeitpunkt gewählt und/oder bezogen auf diesen angepasst werden. D.h. eine zeitliche Relation, beispielsweise Differenz, zwischen den Taktgebern kann ermittelt werden, sodass in der Folge diese zeitliche Relation mit in übermittelte Zeitpunkte, insbesondere die Startanweisungen, welche einen definierten Zeitpunkt enthalten, einfließen und die übermittelten Zeitpunkte in Hinblick auf diese zeitliche Differenz angepasst werden können.

Mit Vorteil wird der Abgleich, insbesondere die Synchronisation, mehrfach wiederholt und/oder werden in zeitlicher Abfolge mehrfach erste und zweite Informationen an jedes der tragbaren persönlichen Geräte übertragen, wodurch insbesondere jeweils ein neuer Zeitpunkt durch die Startanweisung definiert wird.

In einer weiteren vorteilhaften Ausgestaltung des erfindungsgemäßen Verfahrens sind und/oder werden die Routine, Abfolge und/oder Ablauf zusammen mit Audiosignalen, insbesondere Klicktrack, und/oder Informationen zu deren Generierung gespeichert. Mit Vorteil werden zur Durchführung des Verfahrens mindestens eine Routine, Abfolge und/oder ein Ablauf und/oder Audiosignalen und/oder Informationen zu deren Generierung aus dem Internet, von einem Datenspeicher und/oder mittels einer Datenverbindung in das und/oder von dem Steuerungssystem geladen, wobei dies insbesondere unabhängig vom Funknetzwerk und/oder den tragbaren persönlichen Geräten erfolgt. Dies ermöglicht eine zentrale Steuerung der gesamten audio-visuellen Performance, mittels des Steuerungssystems, insbesondere durch den Sequencer. Durch die gespeicherte Sequencer-Datei kann je nach Ausgestaltung der Datei die audio-visuelle Performance gesamtheitlich vorgeplant werden, dies insbesondere zeitlich bereits vor der audio-visuellen Performance, oder es ist alternativ möglich, in der Sequencer-Datei eine Art Kit mit Elementen zur Steuerung der audio-visuellen Performance bereitzustellen, sodass die audio-visuelle Performance dann während ihrer Durchführung, insbesondere bei einer Live-Performance, unter Rückgriff auf diese gestaltet werden kann, so z.B. durch Ton- und/oder Licht-Techniker innerhalb des Veranstaltungsgeländes. Insbesondere kann die audio-visuelle Performance im Falle einer solchen Live-Gestaltung dann auf sich ändernde Begebenheiten und/oder Voraussetzung innerhalb des Veranstaltungsgeländes und/oder der audio-visuellen Performance reagiert werden. Beispielhaft ist es so z.B. möglich, während eines Solos o.Ä. eines Musikers auf der Bühne, die restliche audio-visuelle Performance auf die Länge des Solos anzupassen, da die Länge solcher Soli in der Regel stark variieren, insbesondere auch Soli desselben Musikers, insbesondere bei unterschiedlichen Live-Performances. Alternativ können hierzu auch lediglich Steueranweisungen, die direkte Aktivierungsbefehle bzw. Anweisung zum sofortigen Auslösen einer Routine, Abfolge und/oder Ablauf beinhalten, in das Steuerungssystem geladen und in diesem gespeichert werden. Insbesondere sind die auszulösenden Routinen, Abfolgen und/oder Abläufe dann auf den tragbaren, persönlichen Geräten gespeichert und/oder werden zur Durchführung des Verfahrens aus dem Internet, von einem Datenspeicher und/oder mittels einer Datenverbindung in die tragbaren, persönlichen Geräte geladen.

Gelöst wird die Aufgabe zudem durch einen Computer-lesbaren Speicher eines Hard- und Software-Systems, auf welchem Computer-lesbare Instruktionen gespeichert sind, welche, wenn ausgeführt durch eine Prozessoreinheit des Hard- und Software-Systems, den Prozessor zur Durchführung des erfindungsgemäßen Verfahrens befähigen. Als Hard- und Software-Systeme kommen sowohl ein erfindungsgemäßes Steuerungssystem als auch die tragbaren persönlichen Geräte, so insbesondere Smartphones, in Betracht. Je nach durchzuführender Aufgabe des Hard- und Software-Systems können die in dem Computer-lesbaren Speicher hinterlegten Instruktionen auf die entsprechenden Aufgaben angepasst sein.

Gelöst wir die Aufgabe des Weiteren durch ein Steuerungssystem eingerichtet zur Durchführung des erfindungsgemäßen Verfahrens. Das erfindungsgemäße Steuerungssystem umfasst zumindest eine Prozessoreinheit, einen Speicher, insbesondere einen erfindungsgemäßen Computer-lesbaren Speicher, einen Zeitgeber und mindestens ein Funkkommunikationsmittel.

Mittels des mindestens einen Funkkommunikationsmittels ist das Steuerungssystem mit dem Funknetzwerk verbunden, sodass eine Kommunikation zwischen anderen Netzwerkteilnehmer, insbesondere der Mehrzahl tragbarer persönlicher Geräte, und dem Steuerungssystem über das Funknetzwerk ermöglicht wird. Das mindestens eine Funkkommunikationsmittel ist ferner dazu eingerichtet, Daten über das Funknetzwerk von dem Steuerungssystem auf andere Netzwerkteilnehmer zu übertragen und/oder an diese zu senden sowie durch das Funknetzwerk von den anderen Netzteilnehmer an das Steuerungssystem übermittelte Daten, wie insbesondere beispielsweise Identifikationscodes und/oder -nummern, insbesondere eine Netzwerkadresse, und/oder Standortdaten der tragbaren persönlichen Geräte, zu empfangen und insbesondere an die Prozessoreinheit weiterzuleiten.

Die Prozessoreinheit ist zur Durchführung des erfindungsgemäßen Verfahrens eingerichtet. Hierzu sind Ausführungsanweisungen zur Durchführung des erfindungsgemäßen Verfahrens in dem Speicher gespeichert. Der Prozessor hat ferner Zugriff auf die Ausführungsanweisungen, welche die Prozessorreinheit zur Durchführung des erfindungsgemäßen Verfahrens befähigen. Ferner kann die Prozessoreinheit dazu eingerichtet sein, von den anderen Netzteilnehmer an das Steuerungssystem übermittelte Daten, insbesondere Standortdaten, zu analysieren, insbesondere anhand der Daten die tragbaren persönlichen Geräte in Gruppen und/oder Untergruppen zuzuordnenden, und die übermittelten Daten und/oder Ergebnisse der Datenanalyse, insbesondere die den tragbaren persönlichen Geräten zugeordneten Gruppen und/oder Untergruppen, in dem Speicher zu hinterlegen, insbesondere zur weiteren Verwendung in dem erfindungsgemäßen Verfahren. Insbesondere kann die Prozessoreinheit ferner dazu eingerichtet sein, die Ergebnisse der Datenanalyse, insbesondere die den tragbaren persönlichen Geräten zugeordneten Gruppen und/oder Untergruppen, mittels des mindestens einen Funkkommunikationsmittels an die Netzwerkteilnehmer, insbesondere die tragbaren persönlichen Geräte, zu übertragen und/oder zu senden und/oder zu übermitteln.

Ferner können in dem Speicher erste und/oder zweite Informationen, Routinen und/oder Abläufe zur Abgabe von Licht hinterlegt und/oder gespeichert sein. Die Prozessoreinheit ist eingerichtet, basierend auf den übermittelten Daten und/oder Ergebnisse der Datenanalyse für die jeweiligen Netzwerkteilnehmer, insbesondere jeweilige tragbare persönliche Geräte, insbesondere in Abhängigkeit zur Zuordnung in Gruppen und/oder Untergruppen, auf diese angepasste erste und/oder zweite Informationen, Routinen und/oder Abläufe auszuwählen und die ausgewählten ersten und/oder zweiten Informationen, Routinen und/oder Abläufe an die jeweiligen Netzwerkteilnehmer, insbesondere die jeweiligen tragbaren persönlichen Geräte, zu senden.

Mittels des Zeitgebers kann das Steuerungssystem mit den anderen Netzwerkteilnehmern, insbesondere den tragbaren persönlichen Geräten, zeitlich synchronisiert werden. Hierzu kann die Zeit des Zeitgebers beispielsweise mittles des Funknetzwerkes an die anderen Netzwerkteilnehmer übermittelt werden und/oder die Zeit von Zeitgebern der jeweiligen Netzwerkteilnehmer von den Netzwerkteilnehmern an das Steuerungssystem übermittelt und/oder gesendet werden und/oder vom Steuerungssystem angefordert werden, um insbesondere Zeitdifferenzen zwischen den Zeitgebern zu ermitteln, wobei die ermittelten Zeitdifferenzen insbesondere im Speicher, insbesondere den jeweiligem Netzwerkteilnehmern zugeordnet, gespeichert werden können. Des Weiteren kann mittels Laufzeitmessung die Latenz innerhalb der Funkkommunikation zwischen Steuerungssystem und Netzwerkteilnehmer bestimmt werden. Auch kann ein Abgleich der Zeitgeber mittels ntp (network time protocoll) o.Ä. erfolgen.

Insbesondere kann die Prozessoreinheit eingerichtete sein, die ermittelten Zeitdifferenzen und/oder Latenzen beim Senden und/oder Übertragen der ersten und/oder zweiten Information, Routine und/oder des Ablaufs zur Abgabe von Licht mittels des mindestens einen Funkkommunikationsmittels über das Funknetzwerk an die anderen Netzwerkteilnehmer erfindungsgemäß derart zu beachten, dass die erste und/oder zweite Information, Routine und/oder der Ablaufs zur Abgabe von Licht durch zumindest einen Teil, insbesondere eine Gruppe und/oder Untergruppe, der Netzwerkteilnehmer, insbesondere der tragbaren persönlichen Geräte, zeitgleich empfangen und/oder verarbeitet und/oder in eine synchrone Abgabe von Licht durch die Netzwerkteilnehmer, insbesondere durch die tragbaren persönlichen Geräte, umgesetzt wird. Insbesondere kann hierbei die erste Information an die jeweilige Gruppe und/oder Untergruppe und/oder den jeweiligen Netzwerkteilnehmer, insbesondere das jeweilige tragbare persönliche Gerät, durch die Prozessoreinheit angepasst werden, insbesondere unter Beachtung der Zeitdifferenz zwischen dem Zeitgeber des Steuerungssystems und des jeweiligen Netzwerkteilnehmers und/oder der Latenz innerhalb der Kommunikation des Steuerungssystems und des jeweiligen Netzwerkteilnehmers über das Funknetzwerk.

Das erfindungsgemäße Steuerungssystem kann ferner darüber hinaus mit einem Sequencer verbunden oder kann diesen beinhalten.

Darüber wird die Aufgabe auch tragbare persönliche Geräte aufweisend eine Prozessoreinheit, einen Speicher, insbesondere einen erfindungsgemäße Computer-lesbaren Speicher, sowie mindestens ein Funkkommunikationsmittel und mindestens ein Leuchtmittel, insbesondere ein Display.

Mittels des mindestens einen Funkkommunikationsmittels sind die tragbaren persönlichen mit dem Funknetzwerk verbunden, sodass den tragbaren persönlichen Geräten und dem erfindungsgemäßen Steuerungssystem über das Funknetzwerk ermöglicht wird. Das mindestens eine Funkkommunikationsmittel ist ferner dazu eingerichtet, Daten über das Funknetzwerk von dem zu empfangen Steuerungssystem und/oder von einem Server, insbesondere Internetserver, wobei der Server insbesondere auch das erfindungsgemäße Steuerungssystem sein kann und/oder Teil des Steuerungssystems sein kann, herunterzuladen und insbesondere in dem Speicher zu hinterlegen und/oder zu speichern. Die empfangenen und/oder heruntergeladenen Daten können hierbei insbesondere Computer-lesbare Instruktionen, welche, wenn ausgeführt durch eine Prozessoreinheit des Hard- und Software-Systems, den Prozessor zur Durchführung des erfindungsgemäßen Verfahrens befähigen, und/oder erste und/oder zweite Informationen, Routinen und/oder Abläufe zur Abgabe von Licht beinhalten, wobei die Prozessoreinheit erste und/oder zweite Informationen, Routinen und/oder Abläufe zur Abgabe von Licht in eine Abgabe von Licht mittels des mindestens einen Leuchtmittels umzusetzen.

Ferner ist das mindestens einen Funkkommunikationsmittel darüber hinaus dazu eingerichtet, Daten, wie insbesondere beispielsweise Identifikationscodes und/oder -nummern, insbesondere eine Netzwerkadresse, und/oder Standortdaten der tragbaren persönlichen Geräte, an das erfindungsgemäße Steuerungssystem zu senden und/oder zu übermitteln.

Ferner kann insbesondere ein Zeitgeber vorgesehen sein. Der Zeitgeber ist zur Kommunikation mit dem Prozessor und/oder dem Funkkommunikationsmittel eingerichtet. Mittels des Funkkommunikationsmittels kann der Zeitgeber des tragbaren persönlichen Geräts mit dem Zeitgeber des Steuerungssystems abgeglichen werden. Hierzu kann der Wert des Zeitgebers der tragbaren persönlichen Geräte an das Steuerungssystem übermittelt werden, sodass der Abgleich durch das Steuerungssystem erfolgt, oder das Steuerungssystem sendet den Wert seines Zeitgebers an das tragbare persönliche Gerät, sodass der Abgleich durch diese vollzogen wird. Insbesondere kann, wenn der Wert des Zeitgebers des Steuerungssystems oder eine durch das Steuerungssystem ermittelte Zeitdifferenz zwischen den Zeitgebern durch das Steuerungssystem an die tragbaren persönlichen Geräte gesendet und durch die tragbaren persönlichen Geräte empfangen wird, kann diese im Speicher hinterlegt werden. Mittels der Prozessoreinheit kann nachfolgend der Zeitgeber des tragbaren persönlichen Geräts auf den Zeitgeber des Steuerungssystems angepasst und/oder die Zeitdifferenz bei der Umsetzung erhaltener Informationen, Routinen und/oder Abläufe zur Abgabe von Licht durch den Prozessor mitbeachtet werden.

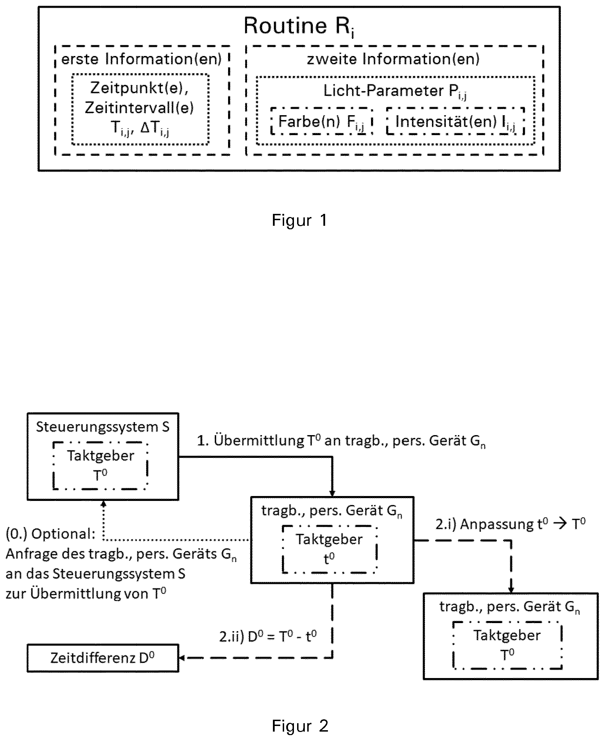

Die Figuren 1 bis 7 sollen zur weiteren Veranschaulichung des erfindungsgemäßen Verfahrens dienen und zeigen verschiedene Ausgestaltungsformen und/oder Teilaspekte des erfindungsgemäßen Verfahrens. Hierbei stehen die einzelnen Figuren nicht allein, vielmehr sind diese bzw. die darin offenbarten Vorteile miteinander kombinierbar, insbesondere das erfindungsgemäße Verfahren nicht auf diese begrenzt. Hierbei zeigen:
- Figur 1: eine Ausgestaltungsform einer Routine innerhalb des erfindungsgemäßen Verfahrens,
- Figur 2: ein Diagramm beinhaltend die Synchronisation zwischen dem Steuerungssystem und den tragbaren persönlichen Gräten,
- Figur 3: ein Konzept zur Bestimmung der Latenz innerhalb der Kommunikation zwischen Steuerungssystem und tragbaren persönlichen Geräten,
- Figur 4: ein Konzept zur Überführung einer Routine in für ein tragbares persönliches Gerät spezifische Ausführungsanweisungen zur Wiedergabe der Routine durch das tragbare persönliche Gerät,
- Figur 5: einen zeitlichen Verlauf einer Ausgestaltungsform des erfindungsgemäßen Verfahrens,
- Figur 6: einen weiteren zeitlichen Verlauf einer Ausgestaltungsform des erfindungsgemäßen Verfahrens, und
- Figur 7: ein Konzept zur Einteilung der tragbaren persönlichen Geräte in Gruppen und Untergruppen.

Figur 1 zeigt eine mögliche Ausgestaltungsform einer erfindungsgemäßen Routine Rᵢ. Die Routine Rᵢ setzt sich hier aus ersten und zweiten Informationen zusammen. Hierbei ist in der Regel pro erster Information auch mindestens eine zweite Information vorgesehen. Die ersten Informationen beinhalten hierbei Zeitpunkte T_{i,j} und/oder Zeitintervalle ΔT_{i,j}. Die zweiten Informationen umfassen die Parameter P_{i,j} des abzugebenden Lichts, welche sich aus der/den Farben(n) des abzugebenden Lichts F_{i,j} und deren Intensität(en) I_{i,j} zusammen setzen. Jeder zeitlichen Information T_{i,j} kann mindestens ein Parameter des Lichts P_{i,j} zugeordnet werden. Insbesondere können die Farbe F_{i,j} und/oder die Intensität I_{i,j} des Lichtes den Wert "Null" annehmen. Eine solche "Null"-Information dient dem Beenden der Lichtabgabe. Ein Zeitintervall ΔT_{i,j} kann durch die Differenz zwischen zwei Zeitpunkten T_{i,j} inhärent definiert sein oder aber über eine explizite definierte Intervalldauer den Zeitpunkt einer "Null"-Information definieren.

Figur 2 beinhaltet die Synchronisation zwischen einem Steuerungssystem S, aufweisend einen Taktgeber mit einer Zeit T°, und einem tragbaren persönlichen Gerät Gₙ, aufweisend einen Taktgeber mit einer Zeit t°. T° und t° werden in Relation zueinander gesetzt und/oder angeglichen. Hierbei übertragt das Steuerungssystem S in einem ersten Schritt 1) T° an das Gerät Gₙ. Optional kann diese Übertragung durch eine Anfrage des Geräts Gₙ an das Steuerungssystem S initiiert werden. Insbesondere kann diese Anfrage Teil des Einrichtens der tragbaren persönlichen Geräte über das Funknetzwerk sein. Der zweite Schritt beinhaltend die Anpassung der Taktgeber aneinander bzw. deren Synchronisation. In einer ersten Alternative 2.i) wird der Wert T° des Zeitgebers des Steuerungssystems durch das Gerät Gₙ übernommen, sodass dessen Taktgeber in der Folge ebenfalls den Wert T° aufweist. Alternativ (Schritt 2.ii) kann eine Zeitdifferenz D° zwischen dem Wert des Taktgebers des Steuerungssystems S und dem des Taktgebers des Geräts Gₙ ermittelt werden. In der Folge kann dann D° dazu verwendet werden die Zeitwerte des Steuerungssystem T_{i,j} in Gₙ-spezifische Zeitwerte t_{i,j} umzuwandeln bzw. um zurechnen.

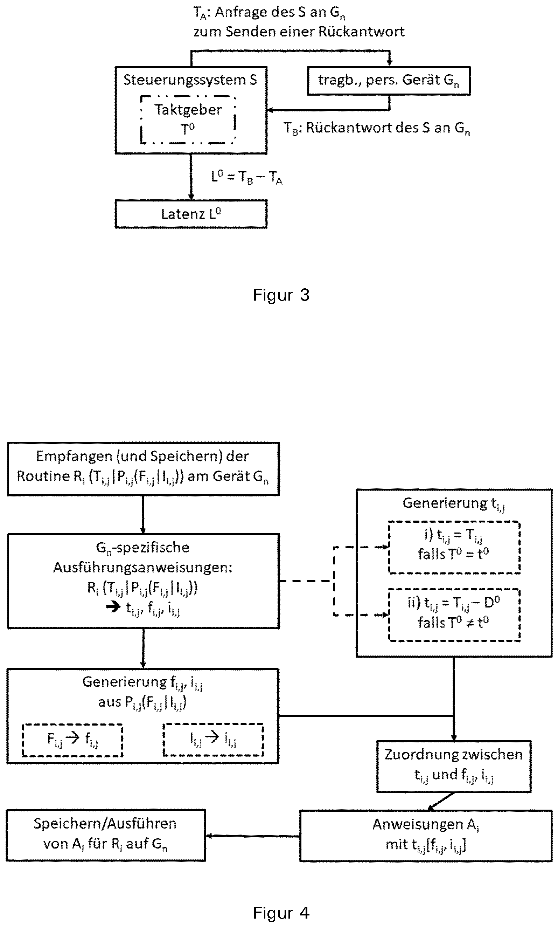

Figur 3 veranschaulicht konzeptionell die Ermittlung einer Obergrenze der Latenz L° innerhalb der Funkkommunikation zwischen Steuerungssystem S und einem tragbaren persönlichen Gerät Gₙ. Hierzu versendet das Steuerungssystem S eine Anfrage zum Senden einer Rückantwort an das Gerät Gₙ zu einem Zeitpunkt T_{A}. Nachfolgend sendet das Gerät Gₙ eine Rückantwort, welche den Zeitpunkt T_{B} enthalten kann. T_{B} kann hierbei entweder der Zeitpunkt des Empfangs der Anfrage oder alternativ der Zeitpunkt des Aussendens der Antwort sein. Alternativ kann T_{B} über den Zeitpunkt des Empfangs der Rückantwort des Geräts Gₙ am Steuerungssystem S bestimmt werden. Die Obergrenze der Latenz L° ergibt sich durch Differenzbildung zwischen T_{B} und T_{A}. Mit Vorteil ist T_{B} der Zeitpunkt des Versendes der Rückantwort, sodass in der Latenz nicht nur die Übermittlungsdauer der gesendeten Daten, sondern auch deren Verarbeitung durch das Gerät Gₙ mitbeachtet wird.

Figur 4 veranschaulicht die Umsetzung einer Routine Rᵢ durch ein Gerät Gₙ. In einem ersten Schritt wird die Routine Rᵢ durch das Gerät Gₙ empfangen und optional auf diesem gespeichert. Die Routine Rᵢ enthält die Zeitpunkte T_{i,j} sowie zu diesen Zeitpunkten T_{i,j} zugeordnete Parameter des Lichts P_{i,j}, welche die Farben F_{i,j} und deren Intensitäten I_{i,j} umfassen. T_{i,j} und P_{i,j} beinhaltend F_{i,j} und I_{i,j} werden in der Folge in für das Gerät Gₙ spezifische Ausführungsanweisungen t_{i,j}, f_{i,j}, i_{i,j} umgewandelt. Zur Ermittlung der t_{i,j} ergeben sich zwei Alternativen, welche von der vorherigen Synchronisation zwischen S und Gₙ abhängen. Falls T⁰ als Zeitwert des Taktgebers von Gn übernommen wurde, entsprechen die t_{i,j} den empfangenen T_{i,j}. Andernfalls werden die t_{i,j} durch Anpassung der T_{i,j} um D⁰ erhalten. f_{i,j} werden direkt aus den F_{i,j} sowie i_{i,j} aus den I_{i,j} generiert, sind demnach hier Transkriptionen der übermittelten F_{i,j} und I_{i,j}. Im Anschluss werden die t_{i,j} und die f_{i,j} und i_{i,j} entsprechend ihrer Indices einander zugeordnet. Hieraus ergibt sich Ausführungsanweisungen Aᵢ, welches als Transkription der Routine Rᵢ spezifisch für das Gerät Gₙ aufgefasst werden können. Die Aᵢ können nachfolgend unmittelbar ausgeführt und/oder für eine spätere Ausführung auf dem Gerät Gₙ gespeichert werden.

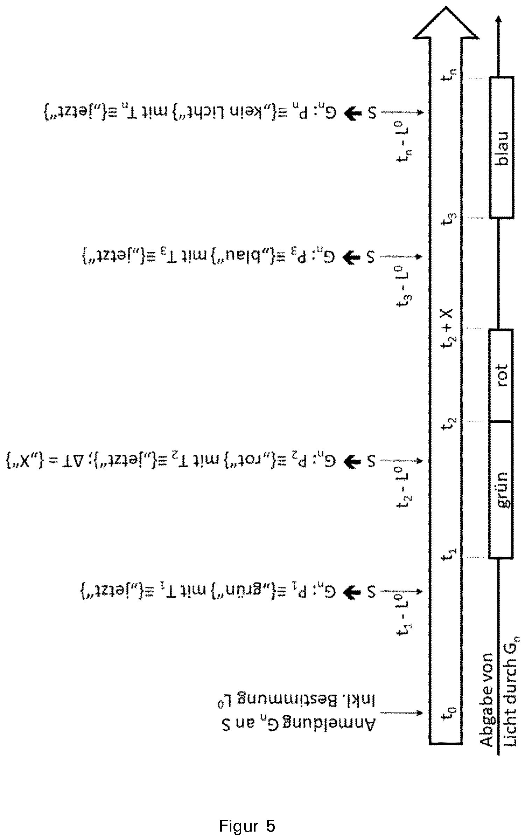

Figur 5 veranschaulicht den zeitlichen Verlauf des erfindungsgemäßen Verfahrens innerhalb einer vorteilhaften Ausgestaltungsform. Bei dieser wird in der Regel keine, insbesondere vollständige, Routine auf das Gerät Gₙ übertragen. Vielmehr übermittelt das Steuerungssystem S die Anweisungen mit dem Ziel einer sofortigen, unmittelbare Umsetzung durch das Gerät Gₙ. Zu einem Zeitpunkt to erfolgt zunächst die Anmeldung des Geräts Gn am Steuerungssystem S. Mit Vorteil wird im weiteren Verlauf des erfindungsgemäßen Verfahrens die Latenz L⁰ innerhalb der Funkkommunikation beachtet, welche vorteilhafterweise zumindest während der Anmeldung des Geräts Gₙ am Steuerungssystem S ermittelt wird. Wenn nun zum Zeitpunkt t₁ eine Abgabe von Licht mit einem Parameter P₁ erfolgen soll, so sendet das Steuerungssystem S die Anweisung hierzu zum Zeitpunkt t₁ - L°, wobei L⁰ hier insbesondere nur die Zeit der Übertragung zu zum Gerät und die Verarbeitung vor der Lichtabgabe beinhaltet. Die Anweisung enthält den P₁. In Figur 5 beinhaltet P₁, dass Licht der Farbe "grün" ausgesendet werden soll. T₁ beinhaltet die Information "jetzt" oder "unmittelbar", insofern keinen explizit genannten Zeitpunkt, sondern gibt Gₙ die Anweisung P₁ ohne Verzögerung umzusetzen. Da kein Zeitintervall, also die Dauer der Lichtabgabe, definiert wurde, erfolgt eine Abgabe von Licht der Farbe "grün" bis Gₙ eine anderweitige Anweisung erhält und insbesondere diese auch umsetzt. In Figur 5 sendet S zum Zeitpunkt t₂ - L⁰ eine neue beinhaltend P₂ mit dem Inhalt "rot", T₂ mit dem Inhalt "jetzt" sowie ein Zeitintervall ΔT mit dem Wert "X". Insofern erfolgt zum Zeitpunkt t₂ ein Wechsel der Farbe des abgegebenen Lichts von "grün" zu "rot". Da ein Zeitintervall ΔT mit dem Wert "X" übermittelt wurde, beendet Gₙ die Abgabe des Lichts zum Zeitpunkt t₂ + X. Zum Zeitpunkt t₃ - L° sendet S erneut eine Anweisung an Gₙ, welche die Parameter P₃ ("blau") und T₃ ("jetzt") enthält. Zum Zeitpunkt t₃ beginnt eine erneute Abgabe von Licht, hier in der Farbe "blau", durch das Gerät Gₙ. Mit Hilfe einer letzten Anweisung zum Zeitpunkt tₙ - L⁰ kann die Abgabe von Licht durch Gₙ beendet werden. Hierzu beinhaltet die Anweisung den Zeitpunkt Tₙ ("jetzt") und den Parameter Pₙ ("kein Licht"). Nachfolgend wird die Abgabe von Licht durch Gn zum Zeitpunkt tₙ beendet. Dieses schematische Beispiel kann prinzipiell um eine beliebige Anzahl weiterer Anweisungen des Steuersystems S an das Gerät Gₙ ergänzt werden.

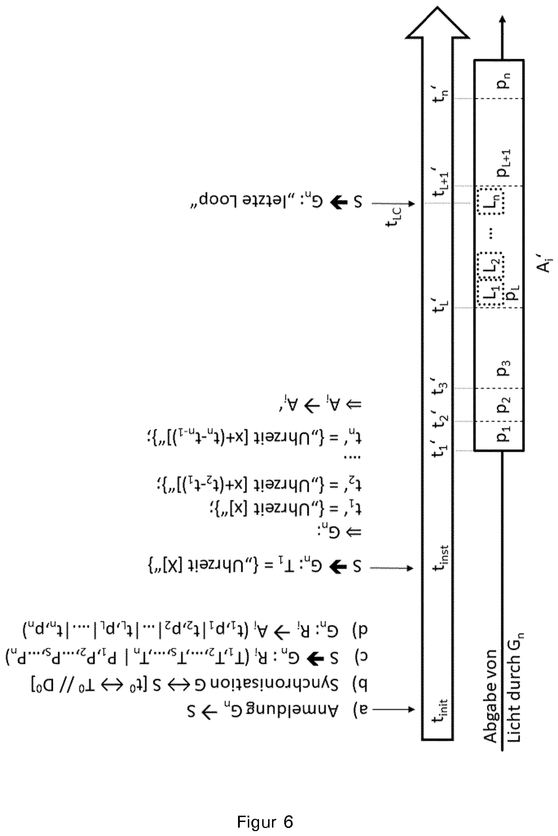

Figur 6 zeigt den zeitlichen Verlauf des erfindungsgemäßen Verfahrens in einer weiteren vorteilhaften Ausführungsform.

Zu einem Zeitpunkt tᵢₙᵢₜ erfolgt zunächst eine Initialisierung bzw. Einrichtung der Geräte Gn zur Durchführung des erfindungsgemäßen Verfahrens. Während der Initialisierung bzw. Einrichtung meldet sich das Gerät Gₙ am Steuerungssystem S an. In einem zweiten Schritt erfolgt während des Initialisierungsvorgangs die Synchronisation zwischen Gₙ und S, insbesondere wie in Figur 2 gezeigt. In der Folge sendet das Steuerungssystem S die Routine Rᵢ an das Gerät Gₙ. Im Anschluss erfolgt die Umsetzung der Routine Rᵢ in die Ausführungsanweisungen Aᵢ, welche auf dem Gerät Gₙ zur späteren Ausführung der Routine Rᵢ gespeichert werden, wodurch die Initialisierung abgeschlossen wird. Die Zeitpunkte tᵢ sind hierbei nicht explizit, insbesondere im Sinne einer Uhrzeit, definiert, sondern es werden lediglich die einzelnen tᵢ in zeitliche Relation zueinander gesetzt.

Zum Zeitpunkt tᵢₙₛₜ sendet das Steuerungssystem S eine Startanweisung an das Gerät Gₙ. Diese Startanweisung beinhaltet einen expliziten Wert, insbesondere eine definierte Uhrzeit, für den Zeitpunkt T₁, somit auch für t₁. Es folgt eine Umwandlung der Zeitpunkte tᵢ zu den Zeitpunkten tᵢ', welche dann eine explizite Zeitangabe, insbesondere eine definierte Uhrzeit, enthalten. Gleichermaßen wird Aᵢ auf die spezifizierten Zeitpunkte tᵢ' angepasst, sodass Aᵢ' erhalten wird. Mit "'" markierte Zeitpunkte haben demnach im in Figur 6 dargestellten Beispiel immer einen definierten Zeitpunkt bezogen auf die Startanweisung des Steuerungssystems S.

Zum Zeitpunkt t₁' startet das Gerät Gn in der Folge die in den Ausführungsanweisungen Aᵢ' gespeicherte Routine. Hierbei wird an den vordefinierten Zeitpunkten t₂', t₃' etc. der Parameter pᵢ des Lichts, insbesondere an die Routine, angepasst. Die in Figur 6 enthaltene Routine weist hierbei darüber hinaus eine Schleife, auch "Loop" genannt, auf, welche insbesondere eine Sub-Routine, enthalten kann. Im gezeigten Beispiel wurde dem Gerät Gₙ beim Laden der Routine keine Informationen darüber vermittelt, nach wie vielen Durchläufen der Schleife die Ausführung der Schleife beendet werden soll. Daher benötigt das Gerät Gₙ eine weitere Anweisung des Steuerungssystems S, zu welchem Zeitpunkt die Schleife verlassen bzw. beendet werden soll. In Figur 6 wird eine Schleife zum Zeitpunkt t_{L}' ausgelöst. Diese wird mehrfach durchlaufen. Während der n-ten Wiederholung der Schleife Lₙ sendet das Steuerungssystem S zum Zeitpunkt t_{LC} eine Anweisung "letzter Loop" an das Gerät Gₙ, übermittelt Gn demnach die Information, dass es sich bei der Loop Lₙ um die letzte Wiederholung handeln soll. Zum Zeitpunkt t_{L+1}' wird demnach die Loop verlassen und die Routine fortgesetzt. Eine solche Möglichkeit, Teile einer Routine und/oder eine Sub-Routine in Schleifen mehrfach wiedergeben zu können, ermöglicht es, die Routine beispielsweise auf die Länge eines Solo-Spiels eines Musikers, diese variieren in der Regel stark in ihrer Länge, anpassen zu können.

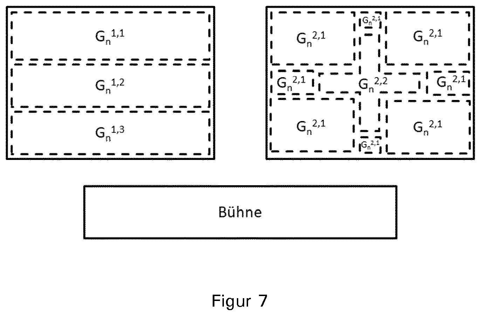

Figur 7 veranschaulicht die Möglichkeit der Einteilung der Geräte Gn in Gruppen und/oder Untergruppen. Die Geräte erhalten hierzu die Bezeichnung Gₙ^{X,Y}, wobei X die Gruppe und Y die Untergruppe angibt. In dem gezeigten Beispiel wurde das vor der Bühne befindliche Publikum zwei Gruppen zugeordnet. Die Gruppe 1 soll hierbei beispielsweise die Flagge der Niederlande als Muster wiedergeben. Hierzu werden 3 Untergruppen benötigt. Die Geräte mit der Zurodnung Gₙ^{1,1} erhalten die Anweisung "rot", Gₙ^{1,2} "weiß" und Gₙ^{1,3} "blau". Gruppe 2 hingegen soll die Flagge der Schweiz wiedergeben. Es werden zwei Untergruppen, Gₙ^{2,1} und Gₙ^{2,2} benötigt, wobei Gₙ^{2,1} die Anweisung "rot" und Gₙ^{2,2} die Anweisung "weiß" erhält.

Die darstellbaren Muster sind keinesfalls auf Flaggen beschränkt, vielmehr sind auch deutlich komplexere Muster, wie beispielsweise Logos von Musik-Bands o.Ä. möglich.

## Patentansprüche

1. Verfahren zur Steuerung einer synchronen, verteilten Abgabe von Licht innerhalb eines Veranstaltungsgeländes während einer audio-visuellen Performancemittels eines Steuerungssystems,
wobei die Abgabe von synchronem, verteiltem Licht durch eine Mehrzahl tragbarer persönlicher Geräte beinhaltend jeweils mindestens ein Leuchtmittel erfolgt,
wobei das Steuerungssystem ausgebildet ist, die Abgabe von Licht durch die Mehrzahl tragbarer persönlicher Geräte zu steuern und/oder zu synchronisieren,
wobei das Steuerungssystem eingerichtet ist, mittels eines Funknetzwerks mit den tragbaren persönlichen Geräten zu kommunizieren,
wobei die mobilen Geräte zur Entgegennahme von Steueranweisungen des Steuerungssystems über das Funknetzwerk eingerichtet werden,
wobei das Einrichten eines jeden der tragbaren persönlichen Geräte durch eine Kontaktaufnahme des jeweiligen tragbaren persönlichen Geräts zum Steuerungssystem angestoßen wird,
wobei die synchrone, verteilte Abgabe von Licht durch die Mehrzahl tragbarer persönlicher Geräte durch Übertragung von mindestens einer ersten Information zur zeitlichen und/oder mindestens einer zweiten Information zur farblichen Steuerung der Abgabe von Licht von dem Steuerungssystem über das Funknetzwerk an die Mehrzahl tragbarer, persönlicher Geräte bewirkt wird,
**dadurch gekennzeichnet, dass**
das Steuerungssystem eine zeitliche Synchronisation zwischen tragbaren persönlichen Geräten und der audio-visuellen Performance steuert und/oder bewirkt, wobei die synchrone verteilte Abgabe von Licht zeitlich synchronisiert zu einer Abgabe von mindestens einem Klicktrack erfolgt.

2. Verfahren nach Anspruch 1, **dadurch gekennzeichnet, dass** das Steuerungssystem mit einer Funkbasisstation verbunden ist und/oder die Funkbasisstation beinhaltet, wobei die Funkbasisstation eingerichtet ist, mittels dem Funknetzwerk mit den tragbaren persönlichen Geräten zu kommunizieren, wodurch das Steuerungssystem eingerichtet wird, über die Funkbasisstation mittels des Funknetzwerks mit den tragbaren persönlichen Geräten zu kommunizieren.

3. Verfahren nach einem der Ansprüche 1 oder 2, **dadurch gekennzeichnet, dass** die mindestens eine erste Information zur zeitlichen Steuerung der Abgabe von Licht ein Zeitpunkt zum Start der Abgabe von Licht und/oder zum Start einer Routine zur Abgabe von Licht und/oder die mindestens eine zweite Information mindestens einen Parameter des Lichts beinhaltet, wobei der mindestens eine Parameter des Lichts Farbe und/oder Intensität ist und/oder die mindesten eine erste und die mindesten eine zweite Information zusammen den zeitlichen Ablauf der Abgabe von Licht, und/oder eine Routine zur zeitlichen Abfolge der Abgabe von Licht definieren.

4. Verfahren nach Anspruch 3, **dadurch gekennzeichnet, dass** die erste Information, die zweite Information, der zeitliche Ablauf, die Routine zur Abgabe von Licht und/oder der mindestens eine Parameter des Lichts vom Steuerungssystem aus über das Funknetzwerk auf die tragbaren, persönlichen Geräten übertragen wird, wobei die erste Information insbesondere eine Startanweisung zur Abgabe von Licht und/oder zum Verwenden der Parameter des Lichts zur Abgabe von Licht über das Funknetzwerk an die tragbaren, persönlichen Geräte ist oder beinhaltet, wobei die Startanweisung eine Anweisung zur Abgabe von Licht oder zu einem Starten der gespeicherten Routine zur Abgabe von Licht und/oder zur Verwendung der Parameter des Lichts an einem durch die Startanweisung definierten Zeitpunkt beinhaltet.

5. Verfahren nach Anspruch 3, **dadurch gekennzeichnet, dass** das Steuerungssystem die Übertragung der ersten und/oder der zweiten Information mindestens 100 ms vor dem durch die Startanweisung definierten Zeitpunkt initialisiert und/oder beginnt und/oder mit einem solchen zeitlichen Vorlauf beginnt, dass bei störungsfreiem Ablauf mit einem Abschluss der Übertragung der ersten und/oder der zweiten Information mindestens 100 ms, vor dem durch die Startanweisung definierten Zeitpunkt zu rechnen ist.

6. Verfahren nach einem der vorherstehenden Ansprüche, **dadurch gekennzeichnet, dass** die Mehrzahl tragbarer persönlicher Geräte in N Gruppen unterteilt werden, wobei N mindestens zwei beträgt und wobei jede der N Gruppen insbesondere mindestens fünfzig tragbare persönliche Geräte beinhaltet.

7. Verfahren nach Anspruch 6, **dadurch gekennzeichnet, dass** die Unterteilung in N Gruppen basierend auf der Position der tragbaren persönlichen Geräte innerhalb des Veranstaltungsgeländes erfolgt, wobei die Position der tragbaren persönlichen Geräte
i. mittels eines Sitzplatzes und/oder einer Sitzplatzbezeichnung, wobei insbesondere zur Erfassung und/oder Zuweisung des Sitzplatzes und/oder der Sitzplatzbezeichnung ein Code verwendet wird, und/oder
ii. mittels Triangulation und/oder Entfernungsmessung zwischen den tragbaren persönlichen Geräten und mindestens zwei Basisstationen und/oder Funkantennen innerhalb des Veranstaltungsgeländes, und/oder
iii. mittels GPS, und/oder
iv. mittels Erfassung von Zugangspunkten an welchen die tragbaren persönlichen Geräte Zugang zu dem Funknetzwerk erhalten und/oder sich in das Funknetzwerk einwählen und/oder einloggen, und/oder
v. mittels Erfassung benachbarter Funknetzwerkteilnehmer bestimmt wird,
wobei eine erste Anzahl tragbarer persönlicher Geräte, die benachbart sind und/oder deren Positionen in einer ersten geografischen Zone innerhalb des Veranstaltungsgeländes liegen, und/oder welche über eine erste Basisstation und/oder Funkantenne Zugang zu dem Funknetzwerk erhalten und/oder sich in das Funknetzwerk einwählen und/oder einloggen, einer ersten Gruppe der N Gruppen zugeordnet werden und eine zweite Anzahl tragbarer persönlicher Geräte, die benachbart sind und/oder deren Positionen in einer zweiten geografischen Zone innerhalb des Veranstaltungsgeländes liegen, und/oder welche über eine zweite Basisstation und/oder Funkantenne Zugang zu dem Funknetzwerk erhalten und/oder sich in das Funknetzwerk einwählen und/oder einloggen, einer zweiten Gruppe der N Gruppen zugeordnet werden.

8. Verfahren nach einem der Ansprüche 6 oder 7, **dadurch gekennzeichnet, dass** die Abgabe von Licht durch tragbaren persönlichen Geräte innerhalb jeder der N Gruppen, insbesondere abweichend von anderen Gruppen der N Gruppen, synchronisiert wird, wobei sich die Abgabe von Licht durch eine erste Gruppe der N Gruppen zeitlich und/oder bzgl. mindestens eines Parameters des Lichts von der Abgabe von Licht durch mindestens eine zweite Gruppe der N Gruppen unterscheidet.

9. Verfahren nach einem der Ansprüche 6 bis 8, **dadurch gekennzeichnet, dass** innerhalb der N Gruppen X Untergruppen vorhanden sind, wobei zur Zuordnung der tragbaren persönlichen Geräte innerhalb einer der N Gruppen zu einer der X Untergruppen die Position der tragbaren persönlichen Geräte relativ zueinander analysiert wird, wobei die Zuordnung zu den X Untergruppen insbesondere alternierend, segmentweise und/oder in einem Muster erfolgt.

10. Verfahren nach einem der vorherstehenden Ansprüche, **dadurch gekennzeichnet, dass** die synchrone verteilte Abgabe von Licht zeitlich synchronisiert zu einer Abgabe von mindestens einer Abgabe von Licht durch eine Vielzahl Lichtabgabegeräte auf dem Veranstaltungsgelände erfolgt.

11. Verfahren nach einem der vorherstehenden Ansprüche, **dadurch gekennzeichnet, dass** das Steuerungssystem eine zeitliche Synchronisation zwischen tragbaren persönlichen Geräten und der audio-visuellen Performance steuert und/oder bewirkt, wobei die synchrone verteilte Abgabe von Licht zeitlich synchronisiert zu einer Abgabe von mindestens eine Instruktion erfolgt, wobei insbesondere die mindestens eine Instruktion mindestens einem Musiker mittels eines Displays und/oder eines Kopfhörers dargeboten wird, wobei die mindestens eine Instruktion ist.

12. Verfahren nach einem der vorstehenden Ansprüche, **dadurch gekennzeichnet, dass** das Steuerungssystem mit einem Modul zur Generierung mindestens eines Zeitmarkers verbunden ist und/oder mit diesem kommuniziert, wobei das Modul dazu eingerichtet ist, mittels des Moduls die Audioausgabe zu erfassen und/oder zu analysieren, wobei durch das Erfassen und/oder Analysieren der Audioausgabe der mindestens eine Zeitmarker generiert wird, wobei der mindestens eine Zeitmarker an das Steuerungssystem übermittelt wird, wobei das Steuerungssystem eingerichtet ist, basierend auf dem mindestens einen Zeitmarker die mindestens eine erste und/oder zweite Information zu generieren und zu senden.

13. Verfahren nach einem der vorstehenden Ansprüche, wobei das Einrichten das Einbinden in das Funknetzwerk, die Vergabe einer Identifikation im Funknetzwerk, die Vergabe einer Adresse im Funknetzwerk und/oder die Bekanntgabe mindestens einer Serveradresse des Steuerungssystems an jedes der tragbaren persönlichen Geräte beinhaltet.

14. Verfahren nach einem der vorstehenden Ansprüche, wobei das Verfahren einen Abgleich, des Steuerungssystems mit mindestens einem Taktgeber in jedem der tragbaren persönlichen Geräte beinhaltet und/oder vor dem durch die Startanweisung definierten Zeitpunkt und/oder das Verfahren den Abgleich des Steuerungssystems mit der Zeit mindestens eines öffentlichen Mobilfunknetzes, das auf dem Veranstaltungsgelände empfangbar ist, erfolgt.

15. Verfahren nach dem vorstehenden Anspruch, wobei der Abgleich, insbesondere die Synchronisation, mehrfach wiederholt wird und/oder in zeitlicher Abfolge mehrfach erste und zweite Informationen an jedes der tragbaren persönlichen Geräte übertragen werden und dadurch insbesondere jeweils ein neuer Zeitpunkt durch die Startanweisung definiert wird und/oder wobei die Routine, Abfolge und/oder Ablauf zusammen mit Audiosignalen und/oder Informationen zu deren Generierung gespeichert sind und/oder werden und zur Durchführung des Verfahrens nach einem der vorstehenden Ansprüche aus dem Internet, von einem Datenspeicher und/oder mittels einer Datenverbindung geladen in das und/oder von dem Steuerungssystem geladen werden.

## Claims

1. A method of controlling synchronous distributed delivery of light within an event area during an audio-visual performance by means of a control system,
wherein synchronous distributed light is emitted by a plurality of portable personal devices each including at least one illuminant,
wherein the control system is adapted to control and/or synchronize the emission of light by the plurality of wearable personal devices,
wherein the control system is arranged to communicate with the portable personal devices by means of a radio network,
wherein the mobile devices are set up to receive control instructions from the control system via the wireless network,
wherein the setup of each of the portable personal devices is initiated by a contact of the respective portable personal device to the control system,
wherein the synchronous, distributed emission of light by the plurality of portable personal devices is effected by transmitting at least one of first information for timing and/or at least one of second information for color control of the emission of light from the control system via the radio network to the plurality of portable personal devices,
**characterised in that**
the control system controls and/or effects temporal synchronization between portable personal devices and the audio-visual performance, wherein the synchronous distributed delivery of light is temporally synchronised to a delivery of at least one click track.

2. The method according to claim 1, **characterised in that** the control system is connected to and/or includes the radio base station, the radio base station being arranged to communicate with the portable personal devices by means of the radio network, whereby the control system is arranged to communicate with the portable personal devices via the radio base station by means of the radio network.

3. The method according to one of claims 1 or 2, **characterised in that** the at least one first information for timing the emission of light comprises a time for starting the emission of light and/or for starting a routine for the emission of light and/or the at least one second information comprises at least one parameter of the light,
wherein the at least one parameter of the light is colour and/or intensity and/or the at least one first and the at least one second information together define the timing of the emission of light, and/or a routine for timing the emission of light.

4. The method according to claim 3, **characterised in that** the first information, the second information, the timing, the routine for dispensing light and/or the at least one parameter of the light is transmitted from the control system to the portable personal devices via the radio network, wherein the first information is or includes in particular a start instruction for dispensing light and/or for using the parameters of the light for dispensing light via the radio network to the portable personal devices,
wherein the start instruction includes an instruction to emit light or to start the stored routine for emitting light and/or for using the parameters of the light at a time defined by the start instruction.

5. The method according to claim 3, **characterised in that** the control system initialises and/or starts the transmission of the first and/or the second information at least 100 ms before the time defined by the start instruction and/or starts with such a time advance that, in the case of fault-free operation, completion of the transmission of the first and/or the second information at least 100 ms before the time defined by the start instruction is to be expected.

6. The method according to any one of the preceding claims, **characterised in that** the plurality of portable personal devices are divided into N groups, wherein N is at least two, and wherein each of the N groups includes in particular at least fifty portable personal devices.

7. The method of claim 6, **characterized in that** the subdivision into N groups is based on the location of the portable personal devices within the event area,
wherein the position of the portable personal devices
i. by means of a seating position and/or a seating position designation, whereby in particular a code is used to record and/or allocate the seating position and/or the seating position designation, and/or
ii. by means of triangulation and/or ranging between the handheld personal devices and at least two base stations and/or radio antennas within the event site; and/or
iii. by means of GPS, and/or
iv. by detecting access points at which the portable personal devices gain access to the radio network and/or dial and/or log into the radio network; and/or
v. is determined by means of detection of neighbouring radio network nodes,
wherein a first number of portable personal devices which are adjacent and/or whose positions are in a first geographical zone within the event site and/or which gain access to and/or dial into and/or log onto the radio network via a first base station and/or radio antenna are assigned to a first group of the N groups and a second number of portable personal devices which are adjacent and/or whose positions are in a second geographical zone within the event site and/or which gain access to and/or dial into and/or log onto the radio network via a second base station and/or radio antenna are assigned to a second group of the N groups.

8. The method according to any one of claims 6 or 7, **characterised in that** the emission of light by portable personal devices within each of said N groups is synchronized, in particular different from other groups of said N groups, wherein the emission of light by a first group of said N groups differs in time and/or with respect to at least one parameter of said light from the emission of light by at least a second group of said N groups.

9. The method according to any one of claims 6 to 8, **characterised in that** X subgroups are present within the N groups, wherein for assigning the portable personal devices within one of the N groups to one of the X subgroups, the position of the portable personal devices relative to each other is analyzed, wherein the assignment to the X subgroups is performed in particular alternately, segmentally and/or in pattern personal devices relative to each other is analyzed, wherein the assignment to the X subgroups is performed in particular alternately, segment-wise and/or in a pattern.

10. The method according to any one of the preceding claims, **characterised in that** the synchronous distributed delivery of light is time-synchronised to a delivery of at least one delivery of light by a plurality of light delivery devices on the event site takes place.

11. The method according to any one of the preceding claims, **characterised in that** the control system controls and/or effects a temporal synchronisation between portable personal devices and the audio-visual performance, wherein the synchronous distributed delivery of light is temporally synchronized to a delivery of at least one instruction, wherein in particular the at least one instruction is presented to at least one musician by means of a display and/or a headphone, wherein the at least one instruction is.

12. The method according to any one of the preceding claims, **characterised in that** the control system is connected to and/or communicates with a module forgenerating at least one time marker, wherein the module is arranged to detect and/or analyze the audio output by means of the module, wherein by detecting and/or analyzing the audio output the at least one time marker is generated, wherein the at least one time marker is transmitted to the control system, wherein the control system is arranged to generate and transmit the at least one first and/or second information based on the at least one time marker.

13. The method according to any one of the preceding claims, wherein said setting up comprises connecting to the radio network, assigning an identification in the wireless network, assigning an address in the wireless network, and/or communicating at least one server address of the control system to each of the portable personal devices.

14. The method according to any one of the preceding claims, the method comprising synchronising, the control system with at least one clock in each of the portable personal devices and/or prior to the time defined by the start instruction and/or the method includes matching the control system with the time of at least one public mobile network receivable at the event site.

15. The method according to the preceding claim, wherein the matching, in particular the synchronisation, is repeated several times and/or first and second information is transmitted several times in temporal sequence to each of the portable personal devices and thereby in particular a new point in time is defined in each case by the start instruction and/or wherein the routine, sequence and/or sequence are and/or will be stored together with audio signals and/or information for generating them and, for carrying out the method according to one of the preceding claims, are loaded from the Internet, from a data memory and/or by means of a data connection into and/or from the control system.

## Revendications

1. Procédé de commande de la distribution synchrone de la lumière dans une zone d'événement pendant un spectacle audiovisuel au moyen d'un système de commande,
dans lequel une lumière distribuée synchrone est émise par une pluralité de dispositifs personnels portables comprenant chacun au moins un illuminant,
dans lequel le système de commande est adapté pour commander et/ou synchroniser l'émission de lumière par la pluralité de dispositifs personnels portables,
dans lequel le système de commande est agencé pour communiquer avec les dispositifs personnels portables au moyen d'un réseau radio,
dans lequel les dispositifs mobiles sont configurés pour recevoir des instructions de commande du système de commande via le réseau sans fil,
dans lequel la configuration de chacun des dispositifs personnels portables est initiée par un contact du dispositif personnel portable respectif avec le système de commande,
dans lequel l'émission synchrone, distribuée, de lumière par la pluralité de dispositifs personnels portables est effectuée en transmettant au moins l'une des premières informations pour la synchronisation et/ou au moins l'une des deuxièmes informations pour la commande de couleur de l'émission de lumière à partir du système de commande via le réseau radio vers la pluralité de dispositifs personnels portables,
**caractérisé en ce que**
le système de commande contrôle et/ou effectue une synchronisation temporelle entre les dispositifs personnels portables et la performance audiovisuelle, dans lequel la distribution synchrone de lumière est synchronisée temporellement avec la distribution d'au moins une piste de clic.

2. Procédé selon la revendication 1, **caractérisé en ce que** le système de commande est connecté à et/ou comprend la station de base radio, la station de base radio étant agencée pour communiquer avec les dispositifs personnels portables au moyen du réseau radio, moyennant quoi le système de commande est agencé pour communiquer avec les dispositifs personnels portables via la station de base radio au moyen du réseau radio.

3. Procédé selon l'une des revendications 1 ou 2, **caractérisé en ce que** ladite au moins une première information pour cadencer l'émission de lumière comprend un moment pour commencer l'émission de lumière et/ou pour commencer une routine pour l'émission de lumière et/ou ladite au moins une deuxième information comprend au moins un paramètre de la lumière,
dans lequel ledit au moins un paramètre de la lumière est la couleur et/ou l'intensité et/ou ledit au moins une première et ladite au moins une deuxième information définissent ensemble le cadencement de l'émission de lumière, et/ou une routine pour cadencer l'émission de lumière.

4. Procédé selon la revendication 3, **caractérisé en ce que** la première information, la deuxième information, le minutage, la routine pour distribuer la lumière et/ou ledit au moins un paramètre de la lumière est transmis du système de commande aux dispositifs personnels portables via le réseau radio, dans lequel la première information est ou inclut en particulier une instruction de démarrage pour distribuer la lumière et/ou pour utiliser les paramètres de la lumière pour distribuer la lumière via le réseau radio aux dispositifs personnels portables, dans lequel l'instruction de démarrage comprend une instruction pour émettre de la lumière ou pour démarrer la routine stockée pour émettre de la lumière et/ou pour utiliser les paramètres de la lumière à un moment défini par l'instruction de démarrage.

5. Procédé selon la revendication 3, **caractérisé en ce que** le système de commande initialise et/ou démarre la transmission de la première et/ou de la deuxième information au moins 100 ms avant l'instant défini par l'instruction de démarrage et/ou démarre avec une avance temporelle telle que, dans le cas d'un fonctionnement sans défaut, l'achèvement de la transmission de la première et/ou de la deuxième information au moins 100 ms avant l'instant défini par l'instruction de démarrage est à prévoir.

6. Procédé selon l'une quelconque des revendications précédentes, **caractérisé en ce que** la pluralité d'appareils personnels portables est divisée en N groupes, où N est au moins deux, et où chacun des N groupes comprend en particulier au moins cinquante appareils personnels portables.

7. Procédé selon la revendication 6, **caractérisé en ce que** la subdivision en N groupes est fondée sur l'emplacement des dispositifs personnels portables dans la zone de l'événement,
dans lequel la position des dispositifs personnels portables
i. au moyen d'une position assise et/ou d'une désignation de position assise, un code étant utilisé en particulier pour enregistrer et/ou attribuer la position assise et/ou la désignation de position assise, et/ou
ii. par triangulation et/ou télémétrie entre les dispositifs personnels portables et au moins deux stations de base et/ou antennes radio sur le site de l'événement ; et/ou
iii. au moyen d'un GPS, et/ou
iv. en détectant les points d'accès auxquels les dispositifs personnels portables accèdent au réseau radio et/ou composent un numéro et/ou se connectent au réseau radio ; et/ou
v. est déterminé au moyen de la détection des nœuds de réseau radio voisins,
dans lequel un premier nombre de dispositifs personnels portables qui sont adjacents et/ou dont les positions se trouvent dans une première zone géographique à l'intérieur du site de l'événement et/ou qui accèdent au réseau radio via une première station de base et/ou une première antenne radio et/ou se connectent à celui-ci sont affectés à un premier groupe des N groupes et un deuxième nombre de dispositifs personnels portables qui sont adjacents et/ou dont les positions se trouvent dans une deuxième zone géographique à l'intérieur du site de l'événement et/ou qui accèdent au réseau radio via une deuxième station de base et/ou une deuxième antenne radio et/ou se connectent à celui-ci sont affectés à un deuxième groupe des N groupes.

8. Procédé selon l'une quelconque des revendications 6 ou 7, **caractérisé en ce que** l'émission de lumière par les dispositifs personnels portables au sein de chacun desdits N groupes est synchronisée, en particulier différente des autres groupes desdits N groupes, dans lequel l'émission de lumière par un premier groupe desdits N groupes diffère dans le temps et/ou par rapport à au moins un paramètre de ladite lumière de l'émission de lumière par au moins un deuxième groupe desdits N groupes.

9. Procédé selon l'une quelconque des revendications 6 à 8, **caractérisé en ce que** X sous-groupes sont présents à l'intérieur des N groupes, dans lequel, pour affecter les dispositifs personnels portables à l'intérieur de l'un des N groupes à l'un des X sous-groupes, la position des dispositifs personnels portables les uns par rapport aux autres est analysée, dans lequel l'affectation aux X sous-groupes est effectuée en particulier alternativement, par segment et/ou selon un motif.

10. Procédé selon l'une quelconque des revendications précédentes, **caractérisé en ce que** la distribution synchrone de lumière est synchronisée dans le temps avec une distribution d'au moins une lumière par une pluralité de dispositifs de distribution de lumière sur le site de l'événement.

11. Procédé selon l'une quelconque des revendications précédentes, **caractérisé en ce que** le système de commande contrôle et/ou effectue une synchronisation temporelle entre les dispositifs personnels portables et le spectacle audiovisuel, dans lequel la distribution synchrone de lumière est synchronisée temporellement avec la distribution d'au moins une instruction, dans lequel en particulier ladite au moins une instruction est présentée à au moins un musicien au moyen d'un écran et/ou d'un casque, dans lequel se trouve ledit au moins une instruction.

12. Procédé selon l'une quelconque des revendications précédentes, **caractérisé en ce que** le système de commande est connecté à et/ou communique avec un module générant au moins un marqueur temporel, dans lequel le module est agencé pour détecter et/ou analyser la sortie audio au moyen du module, dans lequel, en détectant et/ou en analysant la sortie audio, ledit au moins un marqueur temporel est généré, dans lequel ledit au moins un marqueur temporel est transmis au système de commande, dans lequel le système de commande est agencé pour générer et transmettre ladite au moins une première et/ou deuxième information sur la base dudit au moins un marqueur temporel.

13. Procédé selon l'une quelconque des revendications précédentes, dans lequel ladite mise en place comprend la connexion au réseau radio, l'attribution d'une identification dans le réseau sans fil, l'attribution d'une adresse dans le réseau sans fil, et/ou la communication d'au moins une adresse de serveur du système de contrôle à chacun des dispositifs personnels portables.

14. Procédé selon l'une quelconque des revendications précédentes, le procédé comprenant la synchronisation du système de commande avec au moins une horloge dans chacun des dispositifs personnels portables et/ou avant l'heure définie par l'instruction de démarrage et/ou le procédé comprend la mise en correspondance du système de commande avec l'heure d'au moins un réseau mobile public recevable sur le site de l'événement.

15. Procédé selon la revendication précédente, dans lequel l'adaptation, en particulier la synchronisation, est répétée plusieurs fois et/ou des premières et deuxièmes informations sont transmises plusieurs fois en séquence temporelle à chacun des appareils personnels portables et ainsi, en particulier, un nouveau moment est défini à chaque fois par l'instruction de démarrage et/ou dans lequel la routine, la séquence et/ou la suite sont et/ou seront stockées avec des signaux audio et/ou des informations pour les générer et, pour la mise en oeuvre du procédé selon l'une des revendications précédentes, sont chargées à partir d'Internet, d'une mémoire de données et/ou au moyen d'une connexion de données dans et/ou à partir du système de commande.
